# EUROPÄISCHE PATENTSCHRIFT

(11) **EP 2 351 966 B1**
(45) Veröffentlichungstag und Bekanntmachung des Hinweises auf die Patenterteilung: **20.11.2013**
(21) Anmeldenummer: 10405004.2
(22) Anmeldetag: 11.01.2010
(51) Int. Cl.: F23L 15/04, F24H 1/36, F24H 8/00, F28D 21/00

(54) **Wärmetauschersystem**
Heat exchange system
Système d'échangeur de chaleur

(43) Veröffentlichungstag der Anmeldung: 03.08.2011
(73) Patentinhaber: Mügeli Metalltechnik AG, 2575 Täuffelen (CH)
(72) Erfinder: Mügeli, Hans, 2575 Gerolfingen (CH)
(74) Vertreter: Rüfenacht, Philipp Michael

(56) Entgegenhaltungen:
- WO-A1-99/08049
- DE-A1- 4 121 953
- US-A- 2 529 977
- US-A- 4 292 933
- US-A- 5 775 318
- US-A1- 2009 050 077

## Beschreibung

### Technisches Gebiet

Die Erfindung betrifft ein Wärmetauschersystem, insbesondere für einen Pellet- und/oder Holzschnitzelofen, umfassend eine erste Wärmetauschereinheit zum Austausch von Wärmenergie zwischen einem heissen Abgasstrom und einem ersten Wärmeträgermedium und eine zweite Wärmetauschereinheit zum Austausch von Wärmenergie zwischen dem heissen Abgasstrom und einem zweiten Wärmeträgermedium.

### Stand der Technik

Wärmetauschersysteme ermöglichen einen Transport von Wärmeenergie, indem typischerweise die Wärmeenergie von einem ersten Wärmeträgermedium auf ein zweites Wärmeträgermedium übertragen wird.

Ein Wärmetauschersystem gemäß dem Oberbegriff des Anspruchs 1 ist aus DE 41 21 953 A1 bekannt.

Übliche Heizungssysteme umfassen einen Wärmetauscher, welcher die Wärme aus einem Brennraum an Heizungswasser für die Beheizung von Gebäuden, Bereitstellung von Warmwasser und dergleichen überträgt.

Zur Wärmeübertragung sind verschiedenste Techniken bekannt. Von einer direkten Wärmeübertragung wird gesprochen, wenn das erste und das zweite Wärmeträgermedium in direktem Kontakt stehen. Bei einer indirekten Wärmeübertragung sind die beiden Wärmeträgermedien räumlich durch eine wärmedurchlässige Wand getrennt.

Insbesondere bei der indirekten Wärmeübertragung ergeben sich drei typische geometrische Führungen der beiden Wärmeträgermedien, nämlich Gegenstrom, Gleichstrom und Kreuzstrom. Beim Gegenstrom werden im Idealfall (theoretisch) die Temperaturen der beiden Wärmeträgermedien getauscht. Beim Gleichstrom wird im Idealfall ein Mittelwert der Temperaturen der Wärmeträgermedien erreicht. Mittels eines Kreuzstromes wird ein Ergebnis zwischen dem Gleichstrom und dem Gegenstrom erreicht.

Infolge einer Verknappung an fossilen Brennstoffen sowie aufgrund des zunehmenden ökonomischen und ökologischen Bewusstseins steigt die Nachfrage nach effizienten Heizsystemen, insbesondere auch nach Heizsystemen, welche mit erneuerbaren Energieträgern wie Pellet, insbesondere Holzpellet, oder Holzspänen betreibbar sind. Der Begriff "Pellet" bezeichnet typischerweise Presslinge aus Holzspänen und/oder Sägemehl.

Moderne Pelletheizungen stehen in der Wartung einer Öl- oder Gasheizung nicht nach und werden heutzutage kommerziell eingesetzt. Dennoch besteht hinsichtlich des ökologischen und ökonomischen Betriebs von Pelletheizungen noch Entwicklungsbedarf, da die bekannten Heizungssysteme den Nachteil haben, dass sie eine verhältnismässig geringe Energieeffizienz bei relativ hohem Schadstoffausstoss aufweisen. Bei unvollständiger Verbrennung können die Abgase ökologisch bedenkliche oder gar schädliche Stoffe enthalten, wie zum Beispiel unverbrannte Kohlenwasserstoffe, Kohlenmonoxid, Staub und Feinstaub, wobei die Kohlenwasserstoffe und das Kohlenmonoxid nachträglich katalytisch verbrannt und der Staub respektive der Feinstaub durch Filtersysteme aus den Abgasen entfernt werden müssen. Die Katalysatoren und die Filtersysteme müssen dabei gewartet, geprüft und gegebenenfalls auch periodisch ersetzt werden.

### Darstellung der Erfindung

Aufgabe der Erfindung ist es, ein dem eingangs genannten technischen Gebiet zugehörendes Wärmetauschersystem zu schaffen, welches einfach aufgebaut, besonders effizient und wartungsarm ist, und einen schadstoffemissionsarmen Betrieb eines Brenners ermöglicht.

Die Lösung der Aufgabe ist durch die Merkmale des Anspruchs 1 definiert. Gemäss der Erfindung umfasst die erste Wärmetauschereinheit einen ersten und einen zweiten Wärmetauscher, durch welche der heisse Abgasstrom nach Eintritt in die erste Wärmetauschereinheit in Serie geführt ist, wobei die zweite Wärmetauschereinheit einen Wärmetauscher umfasst, durch welchen der heisse Abgasstrom nach Eintritt in die zweite Wärmetauschereinheit geführt ist, wobei die zweite Wärmetauschereinheit der ersten Wärmetauschereinheit in Strömrichtung des heissen Abgasstromes nachgeschaltet ist.

In einem Brenner, insbesondere einem Brenner für Energieträger wie Pellet und/oder Holzschnitzel, werden unter Zufuhr von Brennluft die Energieträger verbrannt, womit heisse Abgase entstehen. Die heissen Abgase werden von einem Brenner, insbesondere einem Pellet-Brenner, in das Wärmetauschersystem eingeleitet. Im ersten Wärmetauscher der ersten Wärmetauschereinheit werden die heissen Abgase abgekühlt und anschliessend vom ersten Wärmetauscher durch den zweiten Wärmetauscher der ersten Wärmetauschereinheit geleitet, wodurch sich die Abgase weiter abkühlen. Die durch die erste Wärmetauschereinheit abgeführte Energie wird zum Beispiel für die Beheizung eines Gebäudes, für die Warmwasseraufbereitung oder dergleichen eingesetzt.

Nachdem der heisse Abgasstrom die erste Wärmetauschereinheit durchlaufen hat, ist die Temperatur des Abgasstromes typischerweise noch immer höher als eine Temperatur der Aussenluft. Deshalb wird zur Restwärmerückgewinnung der Abgasstrom durch einen weiteren Wärmetauscher der zweiten Wärmetauschereinheit geführt, in welchem ein Wärmeaustausch mit einem zweiten Wärmeträgermedium stattfindet. In der zweiten Wärmetauschereinheit wird nun der Abgasstrom weiter abgekühlt, insbesondere bis nahe an die Umgebungs- respektive Aussentemperatur.

Durch die serielle Anordnung mehrerer Wärmetauscher wird eine besonders effiziente Wärmerückgewinnung erreicht. Der heisse Abgasstrom kann dadurch stark, insbesondere annähernd auf Aussentemperatur abgekühlt werden, wobei die Wärme beinahe vollständig zurückgewonnen werden kann. Insbesondere ist das Wärmetauschersystem erfindungsgemäss derart ausgebildet, dass es unabhängig von der Ausbildung des Brenners bzw. des Brennraums ist. Im Gegensatz zu bekannten Systemen findet nämlich der Wärmeaustausch mit den Wärmeträgermedien einzig in den beiden Wärmetauschereinheiten des Systems statt und nicht beispielsweise bereits im Brennraum des Brenners (siehe unten). An das erfindungsgemässe Wärmetauschersystem kann also ein beliebig ausgebildeter Brennraum mit Brenner angeschlossen werden, wobei es ausreichend ist, den vom Brenner erzeugten heissen Abgasstrom in das Wärmetauschersystem einzuleiten. Ein Anschluss des Brennraums an das System des Wärmeträgermediums wie z.B. vor oder Rücklauf eines Heizungssystems ist somit nicht erforderlich.

Während der Verbrennung von organischen Brennstoffen, insbesondere Holzpellet, Holzschnitzel, aber auch bei Erdöl etc. fallen unter anderem typischerweise Wasserdampf, Kohlendioxid, Schwefeloxide und weitere Stoffe an. Durch die Abkühlung des Abgasstromes unter den Taupunkt wird eine Kondensation des Wasserdampfes im Abgasstrom erreicht. Durch die Kondensation des Wasserdampfes werden einerseits Schadstoffe aus den Abgasen ausgewaschen, wodurch auf den Einsatz von aufwändigen Katalysatoren und/oder Filtersystemen verzichtet werden kann, sodass sich ein Wartungsaufwand des Wärmetauschersystems reduziert. Anderseits wird eine Rückgewinnung im Wesentlichen der gesamten Wärmenergie im Abgasstrom ermöglicht, sodass dieser das System weitgehend auf Aussenlufttemperatur gekühlt verlässt . Damit kann also sowohl die Verdampfungswärme als auch die durch eine Temperaturdifferenz des Abgasstromes zur Aussenlufttemperatur bedingte Wärme verwertet werden.

Durch den Einsatz zweier getrennter Wärmetauschereinheiten für jeweils ein Wärmeträgermedium wird erreicht, dass der Abgasstrom durch zwei weitgehend unabhängige Temperaturzonen geführt ist. Damit ist der Vorteil verbunden, dass beispielsweise die Temperaturen der Temperaturzonen an das jeweilige Wärmeträgermedium optimal angepasst werden können. Insbesondere können beispielsweise mittels einer Strömungsgeschwindigkeit der Wärmeträgermedien und/oder einer Strömungsgeschwindigkeit des heissen Abgasstromes die Wärmetauschereinheiten optimal an die Erfordernisse angepasst werden bzw. gesteuert werden.

Die erste Wärmetauschereinheit umfasst wenigstens zwei, bevorzugt genau zwei Wärmetauscher. Vorzugsweise sind die Wärmetauscher als gesonderte Untereinheiten der ersten Wärmetauschereinheit ausgebildet.

In Varianten kann die erste Wärmetauschereinheit auch mehr als zwei, respektive die zweite Wärmetauschereinheit mehr als einen Wärmetauscher umfassen.

Mittels des erfindungsgemässen Wärmetauschersystems kann auf eine Abführung von Wärme aus dem Brennraum verzichtet werden. Damit kann die Verbrennungstemperatur im Brennraum des Brenners gesondert gesteuert werden und insbesondere hoch gehalten werden, so dass bei der Verbrennung weniger Schadstoffe, insbesondere weniger unverbrannte Kohlenwasserstoffe, Kohlenstoffmonoxide, Feinstaub etc. entstehen. Dies stellt eine markante Verbesserung gegenüber herkömmlichen Pelletöfen dar, bei welchen bereits Wärme direkt aus dem Brennraum abgeführt wird, wodurch die Verbrennungstemperatur niedriger ist und damit ein, gegenüber der Erfindung, erhöhter Schadstoffausstoss erfolgen kann.

Vorzugsweise weist die erste Wärmetauschereinheit jeweils einen Anschluss für einen Vorlauf und einen Rücklauf eines Heizungssystems auf, welches mit dem ersten Wärmeträgermedium betrieben ist, wobei das erste Wärmeträgermedium zwischen Vorlauf und Rücklauf ausschliesslich durch die erste Wärmetauschereinheit geführt ist. Ein Wärmeaustausch zwischen dem ersten Wärmeträgermedium und dem heissen Abgasstrom findet ausschliesslich in der ersten Wärmetauschereinheit statt. Insbesondere ist gemäss der vorliegenden Erfindung ein Brenner nicht Teil der ersten Wärmetauschereinheit, womit kein direkter Wärmeaustausch zwischen Wärmeträgermedium und Brennraum erfolgt, sondern ausschliesslich über einen vom Brenner erzeugten heissen Abgasstrom, welcher erfindungsgemäss in die erste Wärmeträgereinheit eingeleitet wird. Das Heizungssystem kann dabei Radiatoren, Bodenheizungen, sowie Ventile zur Entlüftung des Heizungssystems und dergleichen umfassen.

Vorzugsweise umfasst das erste Wärmeträgermedium im Wesentlichen Wasser, insbesondere Heizungswasser für eine Heizung und das zweite Wärmeträgermedium im Wesentlichen Luft, insbesondere Verbrennungsluft für einen Brenner.

Das Wasser, respektive Heizungswasser, kann dabei für einen Heizungskreislauf, insbesondere zur Speisung von Radiatoren verwendet werden. Weiter kann damit direkt Wasser eines Warmwasserreservoirs (zum Beispiel ein Boiler) beheizt werden, indem das Boilerwasser durch die erste Wärmetauschereinheit geführt wird. Das durch die erste Wärmetauschereinheit bereitgestellte Warmwasser kann natürlich auch anderweitig verwendet werden, zum Beispiel wäre auch ein industrieller Einsatz denkbar, wobei das Warmwasser zur Beheizung eines Rührkessels in der chemischen Industrie oder für die Bearbeitung von Lebensmitteln Verwendung finden kann. Die Vorrichtung kann auch für eine Beheizung einer Destillationsapparatur einer Trocknungsanlage oder weiterer technischer Anlagen eingesetzt werden.

In einer Variante kann je nach Anforderung auch ein anderer erster Wärmeträger vorgesehen sein, wobei der Wärmeträger vorzugsweise dem Einsatzgebiet angepasst ist. So könnte das erste Wärmeträgermedium auch aus Luft, einem weiteren Gas oder einem Gasgemisch, oder auch aus anderen Flüssigkeiten, wie zum Beispiel organische Flüssigkeiten oder dergleichen bestehen. Schliesslich könnte auch Wasserdampf als Wärmeträger eingesetzt werden.

Die zweite Wärmetauschereinheit ist insbesondere als Rekuperator zur Übertragung einer Restwärme im Abgasstrom an einen Zuluftstrom ausgebildet. Die durch die zweite Wärmetauschereinheit erwärmte Luft wird bevorzugt für die Speisung des Brenners mit Brennluft verwendet. Dadurch wird eine erhöhte Energieeffizienz erreicht, da die Luft im Brennraum des Brenners zur chemischen Aktivierung weniger hoch aufgeheizt werden muss.

In einer Abwandlung kann auch ein anderer Wärmeträger vorgesehen sein. Zum Beispiel könnten als zweites Wärmeträgermedium Wasser, Gase oder Gasgemische, organische Flüssigkeiten und dergleichen eingesetzt werden.

Bevorzugt ist mindestens ein Wärmetauscher der ersten Wärmetauschereinheit und/oder der zweiten Wärmetauschereinheit im Wesentlichen als Gegenstromwärmetauscher ausgebildet. Das erste Wärmeträgermedium wird bevorzugt zuerst durch den zweiten Wärmetauscher der ersten Wärmetauschereinheit und anschliessend von dieser durch den ersten Wärmetauscher der ersten Wärmetauschereinheit geleitet. Bevorzugt erfolgt auch die Führung der Luft im Wärmetauscher der zweiten Wärmetauschereinheit im Gegenstrom.

Der Begriff "Gegenstrom" ist dahingehend zu verstehen, dass die Führung des Wärmeträgermediums im Wesentlichen parallel und entgegengesetzt zur Führung des Abgasstromes erfolgt. Es ist offensichtlich, dass auch bei einem im Wesentlichen als Gegenstromwärmetauscher ausgebildeten Wärmetauscher ein vektorieller Anteil der Strömung quer zu einer Hauptströmungsrichtung orientiert sein kann.

Mit einer Führung des Wärmeträgermediums im Gegenstrom zum Abgasstrom kann annähernd ein vollständiger Austausch der Wärmeenergie des Abgasstroms erreicht werden kann. Insbesondere heisst dies: Ausgehend von einer Ausgangstemperatur des Wärmeträgermediums von t °C und einer Ausgangstemperatur des Abgases von T °C vor dem Eintritt in die erste Wärmetauschereinheit (mit T > t), kann im Idealfall eine Endtemperatur des Wärmeträgermediums von annähernd T °C erreicht werden, respektive eine Endtemperatur des Abgases von annähernd t °C nach dem Austritt aus der ersten Wärmetauschereinheit. Anders gesagt kann durch die Führung des Wärmeträgermediums im Gegenstrom zum Abgasstrom das Wärmeträgermedium annähernd die Eingangstemperatur des Abgasstromes annehmen. Damit ist der Wärmeaustausch im Gegenstrom besonders effizient, insbesondere theoretisch maximal.

In Varianten kann die Führung des Wärmeträgers auch im Gleichstrom oder im Kreuzstrom erfolgen. Allerdings können damit typischerweise die Temperaturen des Wärmeträgermediums und des Abgasstromes lediglich angenähert werden. Eine solche Ausführung kann dann von Vorteil sein, wenn der Wärmeaustausch besonders schnell erfolgen soll.

Gemäss der Erfindung umfassen die Wärmetauscher der ersten und der zweiten Wärmetauschereinheit jeweils wenigstens ein Rohr zum Durchführen des heissen Abgasstroms, welches in einem Strömraum für das jeweilige Wärmeträgermedium angeordnet ist. Bevorzugt ist der Strömraum durch ein äusseres Gehäuse des Wärmetauschers begrenzt, welches das Rohr umschliesst. Das Gehäuse ist daher bevorzugt gegenüber einer Umgebung wärmeisoliert. Zudem ist eine Längsachse des Rohres im Wesentlichen vertikal ausgerichtet. Die Längsachse des Rohres definiert dabei auch eine Längsachse des Wärmetauschers. Unter dem Begriff "vertikal" ist hier und im Folgenden eine Ausrichtung parallel zu einer Richtung der Erdanziehung zu verstehen. Eine weitgehend vertikale Ausrichtung umfasst im vorliegenden Fall auch Ausrichtungen, welche gewisse Abweichungen von einer Vertikalen umfassen (siehe unten). Durch die weitgehend vertikale Anordnung des Rohres wird ein besonders einfacher und kompakter Aufbau der Vorrichtung erreicht.

In der Regel umfassen geeignete Wärmetauscher für einen verbesserten Austausch der Wärmeenergie mit Vorteil mehrere Rohre bzw. eine Rohrbündel zur Führung des Abgasstroms.

In einer möglicherweise zu bevorzugenden Ausführung können auch die erste und die zweite Wärmetauschereinheit selbst jeweils ein getrenntes Gehäuse umfassen, welche die Wärmetauscher der jeweiligen Einheit umschliessen.

In Varianten können auch andere Abgasführungen vorgesehen sein. Das Rohr kann beispielsweise auch horizontal oder in einem anderen Winkel angeordnet sein. Auch können gebogene Rohre, insbesondere spiralförmige Rohrleitungen zum Einsatz kommen. Weiter ist auch der Einsatz von Plattenwärmeüberträgern, Schichtwärmeüberträgern oder Spiralwärmeüberträgern denkbar. Dem Fachmann sind dazu auch weitere Möglichkeiten bekannt. Ein Gehäuse der ersten Wärmetauschereinheit kann auch einstückig ausgebildet sein, wobei zwischen den beiden Wärmetauschern eine Trennwand vorgesehen ist, welche zumindest teilweise einen Raum um die Rohre des ersten Wärmetauschers von einem Raum um die Rohre des zweiten Wärmetauschers trennt.

Vorzugsweise ist das jeweilige Rohr der Wärmetauscher kreiszylindrisch ausgebildet. Rohre mit kreisförmigem Querschnitt haben den Vorteil, dass sie kostengünstig erhältlich sind. Weiter können die Abgase in Rohren mit kreisförmigem Querschnitt mit verhältnismässiger geringer Reibung geführt werden. Schliesslich wird dadurch auch eine Wartung der Vorrichtung vereinfacht, insbesondere da Rohre mit kreisförmigem Querschnitt einfach zu reinigen sind.

In Varianten können auch Rohre mit anderen Querschnitten eingesetzt werden. Solche Rohre haben im Allgemeinen den Vorteil, dass sie gegenüber Rohren mit kreisförmigem Querschnitt eine grössere Oberfläche aufweisen, womit ein effizienterer Wärmeaustausch zwischen dem Wärmeträgermedium und dem heissen Abgasstrom möglich ist. Anderseits sind solche Rohre teurer in der Herstellung und bergen ein höheres Korrosionsrisiko, da sich insbesondere in Bereichen von Kanten Kondenswasser und Schmutz ablagern kann. Damit kann sich auch eine Reinigung des Wärmetauschers aufwändiger gestalten.

Vorzugsweise umfassen die Wärmetauscher mehrer Rohre, welche untereinander parallel und insbesondere berührungsfrei angeordnet sind. Durch die parallele Anordnung wird erreicht, dass die Rohre untereinander bezüglich einer Längsachse der Rohre einen konstanten radialen Abstand aufweisen, womit das Wärmeträgermedium die Rohre mit möglichst geringem Strömungswiderstand umströmen kann. Die Rohre sind bevorzugt berührungsfrei angeordnet, womit eine grösstmögliche Kontaktfläche zwischen den Aussenmänteln der Rohre und dem Wärmeträgermedium erreicht wird. Dadurch wird eine besonders effiziente Wärmeübertragung zwischen dem heissen Abgasstrom und dem Wärmeträgermedium ermöglicht. Um die Stabilität des Wärmetauschers zu erhöhen, respektive um durch die Strömung der Medien (Abgasstrom respektive Wärmeträgermedium) erzeugte Schwingungen zu unterdrücken, können die Rohre auch untereinander verbunden sein.

In Varianten kann der Abstand zwischen zwei Rohren auch variabel sein, insbesondere kann der Abstand bezüglich einer Längsachse zunehmen. Die Rohre können sich auch berühren, womit der Aufbau des Wärmetauschers vereinfacht werden könnte. Dabei müsste aber in Kauf genommen werden, dass der Wärmeaustausch verringert würde. Dem Fachmann ist dazu eine Vielzahl anderer Anordnungsmöglichkeiten für die Rohre bekannt. Insbesondere können die Rohre auch gebogen, insbesondere spiralförmig ausgebildet sein.

Bevorzugt sind die mehreren Rohre der Wärmetauscher der ersten Wärmetauschereinheit in einem Querschnitt im Wesentlichen als regelmässiges Vieleck angeordnet. Der Querschnitt ist dabei rechtwinklig zu den Längsachsen der Rohre orientiert. Anders gesagt sind die Rohre der Wärmetauscher der ersten Wärmetauschereinheit in einem Raster gemäss einem regelmässigen Vieleck angeordnet. In einem horizontalen Querschnitt durch den ersten, respektive den zweiten Wärmetauscher bilden Verbindungslinien zwischen benachbarten Mittelpunkten der randständigen Rohre ein regelmässiges Vieleck. Damit wird eine besonders kompakte Bauweise erreicht. Die Aussenfläche einer gedachten gemeinsamen Umhüllenden der Rohre respektive des Rohrbündels kann dadurch möglichst gering gehalten. Zudem können die Rohre in einem Gehäuse untergebracht werden, welches bei einem gegebenen Volumen eine verhältnismässig geringe Oberfläche aufweist. Damit kann eine Wärmeabgabe an die Umgebung, welche typischerweise trotz Isolation auftritt, reduziert bzw. minimiert werden.

In Varianten können die Rohre auch in einem kreisförmigen, elliptischen, polygonalen oder rechteckigem Muster angeordnet sein.

Vorzugsweise ist ein Gehäuse eines Wärmetauschers der ersten Wärmetauschereinheit im Wesentlichen als Kreiszylinder ausgebildet. Damit umfasst das Gehäuse das Rohr bzw., im Falle mehrerer Rohre, die Rohre zur Führung des Abgasstroms des jeweiligen Wärmetauschers. Bevorzugt wird das Wärmeträgermedium durch das Gehäuse des Wärmetauschers geströmt, womit ein Innenraum des Gehäuses den Strömraum bildet. Das Gehäuse ist hierzu vorzugsweise nach aussen wärmeisoliert. Der Abstand der Gehäusewand zu den am nächsten liegenden Rohren ist vorzugsweise kleiner als der Abstand zwischen zwei benachbarten Rohren. Damit sind alle Rohre möglichst gleichmässig vom Wärmeträgermedium umströmt und es ergibt sich eine optimale Wärmeübertragung zwischen dem heissen Abgasstrom und dem Wärmeträgermedium ergibt.

In Varianten kann das Gehäuse auch eine andere Form, zum Beispiel die Form eines Quaders, d.h. einen rechteckigen Querschnitt, aufweisen. Bevorzugt entspricht die Form des Gehäuses im Allgemeinen jedoch weitgehend einer umhüllenden Mantelfläche des Rohrbündels, mit einer gleichmässigen äusseren Beabstandung von den äussersten Rohren.

Der erste Wärmetauscher der ersten Wärmetauschereinheit ist bevorzugt über eine Umlenkung mit dem zweiten Wärmetauscher der ersten Wärmetauschereinheit verbunden, womit der heisse Abgasstrom um einen Winkel zwischen 160° und 180° umgelenkt ist. Durch die Umlenkung des Abgasstromes werden Staubpartikel und Aerosole durch die Fliehkraft radial nach aussen getrieben, wodurch eine Entaschung und eine Trocknung der Abgase erreicht wird. Die Asche respektive der Feinstaub und die Kondensate verbleiben somit zumindest teilweise in der Umlenkung. Mittels dieser Umlenkung wird somit eine besonders einfache und effiziente Reinigung der Abgase erreicht.

Aufgrund der Umlenkung um weitgehend 180 Grad, d.h. hier etwa 160-180 Grad, wird zudem erreicht, dass die beiden Wärmetauscher mit ihren Längsachsen weitgehend parallel angeordnet sein können. Die Umlenkung kann dabei z.B. auf einfache Art als quaderförmiger Hohlkörper ausgebildet sein, welcher an einer seiner Seitenflächen zwei Anschlussöffnungen für die Abgasrohre jeweils eines der beiden Wärmetauscher aufweist.

In Varianten kann die Umlenkung auch in einem kleineren oder grösseren Winkel erfolgen. Insbesondere könnte die Umlenkung auch mittels eines Rohres erfolgen, welches eine Schlaufe umfasst.

Bevorzugt ist die Umlenkung in einem vertikal unteren Bereich der ersten Wärmetauschereinheit angeordnet. Damit wird erreicht, dass die Abgase im ersten Wärmetauscher vertikal nach unten (Sturzzüge) geführt und im zweiten Wärmetauscher vertikal nach oben (Steigzüge) geführt werden. Das erste Wärmeträgermedium ist bezüglich des Abgasstromes in Gegenstrom geführt. Der Vorlauf des ersten Wärmeträgermediums erfolgt beim ersten Wärmetauscher und der Rücklauf erfolgt beim zweiten Wärmetauscher. Das erste Wärmeträgermedium ist im zweiten Wärmetauscher vertikal nach unten und im ersten Wärmetauscher vertikal nach oben geführt. Dabei ist vertikal nach unten im Wesentlichen als eine Richtung parallel zur Schwerkraft und vertikal nach oben als eine Richtung entgegen der Schwerkraft zu verstehen. Dies hat den Vorteil, dass Schwebstoffe der Abgase, insbesondere Aerosole und Feinstaub respektive Asche in der Umlenkung nicht nur durch die Fliehkraft, sondern zusätzlich mittels der Schwerkraft aus den Abgasen getrieben werden können. Zudem kann die Umlenkung in diesem Fall zudem als Montagesockel dienen, auf welchem die Wärmetauscher mit ihren Längsachsen in weitgehend vertikaler Richtung ausgerichtet angeordnet sind.

In Varianten kann die Umlenkung auch in einem vertikal oberen Bereich angeordnet sein, wobei in diesem Fall aber die Fliehkraft der Schwerkraft entgegenwirkt, wodurch ein Ausfällen von Schadstoffen (Feinstaub, Asche, Aerosole etc.) aus den Abgasen vermindert wird.

Die Umlenkung umfasst vorzugsweise eine verschliessbare Öffnung und eine mit der Öffnung kommunizierende Aufnahme für einen Behälter, insbesondere für die Aufnahme zum Austragen von Asche und/oder Kondensaten. Der Behälter kann dabei als Schublade ausgebildet sein. Damit wird die Wartung des Wärmetauschers einfach gehalten. Über die verschliessbare Öffnung können so in regelmässigen zeitlichen Abständen die Asche und die Kondensate ausgetragen werden, womit eine Verschleppung der Asche und der Kondensate in den zweiten Wärmetauscher oder in die zweite Wärmetauschereinheit vermindert werden kann. Die verschliessbare Öffnung kann dabei in bekannter Weise, zum Beispiel als verschwenkbare, mit Dichtungen versehene Tür, ausgebildet sein. Die Schublade kann eingelassene oder vorstehende Haltegriffe aufweisen und kann rollbar gelagert sein.

In Varianten kann auf die Schublade auch verzichtet werden. In diesem Fall müsste die Umlenkung periodisch gereinigt werden.

Bei vertikaler Anordnung der Wärmetauscher der ersten Wärmetauschereinheit weisen die Strömräume jedes Wärmetauschers jeweils einen oberen Abschluss auf. Bevorzugt weist der jeweilige obere Abschluss über einen Gesamtquerschnitt unterschiedliche vertikale Höhen über einer Horizontalen auf. Dabei ist ein Anschluss für das Wärmeträgermedium bevorzugt an einer vertikal höchsten Stelle am oberen Abschluss angeordnet. Damit können z.B. Dampfschläge vermindert werden, welche auftreten, wenn das Wärmeträgermedium lokal überhitzt und schlagartig verdampft. Eine lokale Überhitzung kann insbesondere dann auftreten, wenn sich beispielsweise Nischenwirbel bilden oder eine Grenzfliessgeschwindigkeit des Wärmeträgermediums unterschritten wird. Durch die Ausbildung eines oberen Abschlusses mit unterschiedlichen vertikalen Höhen und der Anordnung eines Anschlusses an einer höchsten Stelle des oberen Abschlusses wird erreicht, dass das Wärmeträgermedium auch am oberen Abschluss und in Ecken oder Kanten des Strömraums eine Fliessgeschwindigkeit aufweist, welche über der besagten Grenzfliessgeschwindigkeit liegt. Zudem werden auch zuverlässig allfällig auftretende Luftblasen aus dem Wärmetauscher abgeführt.

Bevorzugt umfasst der obere Abschluss Öffnungen, an welchen die Rohre zur Abgasstromführung bündig abschliessen oder die Öffnungen durchdringen. Insbesondere kann der Abschluss dabei als plattenförmige Lochblende ausgebildet, durch welche Löcher die Rohre hindurch treten bzw. an welchen die Rohre enden. Ist der Strömraum für das Wärmeträgermedium durch das die Rohre umschliessende Gehäuse des jeweiligen Wärmetauschers begrenzt, bilden die oberen Abschlüsse gleichzeitig einen Deckel des weitgehend vertikal angeordneten Gehäuses. In diesem Fall umfassen die Wärmetauscher der ersten Wärmetauschereinheit bevorzugt beispielsweise einen Zylindermantel, mit zwei endseitig angebrachten, als kongruente Lochblenden ausgebildeten Deckflächen. Jeweils zwei, bezüglich der Zylinderlängsachse fluchtende, Öffnungen der Lochblenden (Löcher) sind durch eines der Rohre zur Führung des Abgasstroms verbunden.

Um die oben beschriebenen unterschiedlichen vertikalen Höhen der oberen Abschlüsse zu erreichen, kann die Lochblende beispielsweise bezüglich der Längsachse des Zylindermantels d.h. bezüglich der Längsachse des Wärmetauschers schräg angeordnet sein. Eine derartige Anordnung ist herstellungstechnisch allerdings aufwändig, da beispielsweise die Löcher der Lochblenden elliptisch ausgebildet sein müssen, wenn die Längsparallelen Rohre einen kreisförmigen Querschnitt haben. Bei anderen Querschnitten der Rohre wären die Öffnungen der Lochblenden noch komplizierter auszugestalten. Die Erfindung schlägt daher vor, die Wärmetauscher der ersten Wärmetauschereinheit mit ihren Längsachsen gegenüber einer Vertikalen geringfügig geneigt anzuordnen. Damit wird erreicht, dass die Wärmetauscher mit oberen Abschlüssen versehen sein können, welche - herstellungstechnisch vorteilhaft - rechtwinklig zu den Rohren angeordnet sind und sich dennoch die bevorzugten unterschiedlichen vertikalen Höhen der oberen Abschlüsse ergeben.

Gemäss der Erfindung sind für eine kompakte Bauweise der ersten Wärmetauschereinheit dabei die beiden Wärmetauscher der ersten Wärmetauschereinheit V-förmig zueinander angeordnet. Hierzu kann beispielsweise eine Oberseite einer unten angeordneten Umlenkung für den Abgasstrom giebelförmig ausgebildet sein, sodass die Wärmetauscher mit ihren Längsachsen nach oben V-förmig auseinanderlaufen, wenn sie zu beiden Seiten des Giebels auf der Umlenkung montiert werden. Die leichte Neigung der Wärmetauscher gegenüber einer Vertikalen bedingt zudem aufgrund von Konvektion einen nicht longitudinalen Anteil der Umströmung der Rohre durch das Wärmeträgermedium, womit eine Wärmeübertragung von den Rohren an das Wärmeträgermedium weiter optimiert werden kann.

Die oberen Abschlüsse können beispielsweise auch kegelförmig ausgebildet sein, wobei ein Anschluss für das Wärmeträgermedium in diesem Fall mittig, an der Spitze der Kegelform angeordnet ist. In diesem Fall können die Wärmetauscher exakt vertikal ausgerichtet angeordnet sein. Eine Kegelform ist allerdings komplizierter herzustellen, weshalb im Allgemeinen eine Schrägstellung der Wärmetauscher vorzuziehen ist.

Bevorzugt sind der erste und der zweite Wärmetauscher der ersten Wärmetauschereinheit dabei derart V-förmig zueinander angeordnet, dass zwischen dem Rohr des ersten Wärmetauschers und dem Rohr des zweiten Wärmetauschers ein Winkel von weniger als 20°, insbesondere weniger als 10°, bevorzugt ungefähr 5° vorliegt. Damit kann auf einfache Weise wie oben beschrieben die Bildung von Dampfschlägen verhindert werden. Indem die Wärmetauscher nach oben auseinanderlaufen wird in einem oberen Bereich Platz für weitere Komponenten der ersten Wärmetauschereinheit geschaffen. Insbesondere ergeben sich aufgrund der V-förmigen Anordnung die höchsten Stellen der oberen Abschlüsse zu einer Mitte zwischen den Armen der V-Form hin. Die an den höchsten Stellen angeordneten Anschlüsse sind somit zentral an der Wärmetauschereinheit vorgesehen, was die Installation des Systems vereinfacht. Durch den zusätzlichen Platz im oberen Bereich können die Anschlüsse zudem platzsparend integriert werden.

In Varianten kann der Winkel auch von den 5° abweichen.

Vorzugsweise weist der Wärmetauscher der zweiten Wärmetauschereinheit mehrere Rohre zur Führung des Abgasstroms auf, welche zueinander parallel und in einer Reihe, d.h. mit ihren Längsachsen in einer Ebene, angeordnet sind. Bevorzugt ist die zweite Wärmetauschereinheit parallel zur ersten Wärmetauschereinheit derart angeordnet, dass die Ebene der Längsachse der Rohre der zweiten Wärmetauschereinheit parallel zu einer Ebene liegt, in welcher die Längsachsen der Wärmetauscher der ersten Wärmetauschereinheit liegen. Damit wird eine besonders kompakte Bauweise des gesamten Wärmetauschersystems erreicht, indem die zweite Wärmetauschereinheit seitlich an der ersten Wärmetauschereinheit montiert werden kann . Insbesondere können die erforderlichen Verbindungen zur Führung des Abgasstroms von der ersten zur zweiten Wärmetauschereinheit sowie die Anschlüsse zur Zuführung von Aussenluft zur zweiten Wärmetauschereinheit und von dort als Brennerzuluft zum Brenner kurz gehalten werden. Damit ist neben einer einfachen und kompakten Bauweise und ein geringer Wärmeverlust durch die Verbindungen gewährleistet.

In Varianten kann die zweite Wärmetauschereinheit zum Beispiel im Wesentlichen wie der erste oder der zweite Wärmetauscher der ersten Wärmetauschereinheit aufgebaut sein. Dem Fachmann sind viele Möglichkeiten bekannt, wie diese zweite Wärmetauschereinheit, insbesondere ein Rekuperator zur Vorwärmung von Brennluft, ausgebildet und angeordnet sein kann.

Bevorzugt umfasst der Wärmetauscher der zweiten Wärmetauschereinheit ein im Wesentlichen vertikal angeordnetes Abgasrohr mit einem in einem vertikal unteren Bereich verbundenen Umlenkblech, wobei das Umlenkblech zur Horizontalen um einen Winkel von weniger als 20°, insbesondere weniger als 10°, bevorzugt ungefähr um 3° so verschwenkt ist, dass sich das Umlenkblech vom Abgasrohr weg neigt. Das Umlenkblech ist bezüglich der Rohre vorzugsweise so angeordnet, dass die Rohröffnungen weitgehend über dem Umlenkblech zu liegen kommen, so dass eine optimale Umlenkung des Abgasstromes erreicht werden kann. Der Abgasstromeinlass in die zweite Wärmetauschereinheit erfolgt bevorzugt in einem vertikal oberen Bereich derselben und wird in den Rohren nach unten geführt. Anschliessend werden die Abgase durch das Umlenkblech umgelenkt. In diesem Bereich sind die Abgase soweit abgekühlt, dass ein Grossteil der durch die Verbrennung erzeugten Feuchtigkeit kondensiert. Die Kondensate können Schwebstoffe, wie zum Beispiel Feinstaub, und Schadstoffe, wie zum Beispiel Schwefeloxide, absorbieren respektive aus den Abgasen auswaschen. Durch die Neigung des Umlenkbleches fliessen die Kondensate ab. Damit wird das Risiko verhindert, dass das Umlenkblech durch aggressive Stoffe der Abgase angegriffen wird und sich Ablagerungen bilden. Bei geeignetem Brennstoff und geeigneter Einstellung der Parameter des Brenners und der Wärmetauscher können die Abgase durch die Umlenkung um das Umlenkblech soweit gereinigt werden, dass auf einen Einsatz von Filtersystemen gänzlich verzichtet werden kann. Dies hat wiederum den Effekt, dass die Abgase gegen verhältnismässig geringen Widerstand aus dem Abgasrohr ausgestossen werden können.

In der zweiten Wärmetauschereinheit wird der Abgasstrom gegenläufig zu einem Brennluftstrom geführt (Gegenstrom). Damit wird die Brennluft mittels der Restwärme des aus dem zweiten Wärmetauscher geführten Abgases vorgewärmt. Durch die Kondensation der Feuchtigkeit der Abgase in der zweiten Wärmetauschereinheit kann die Kondensationswärme über die Brennluft dem System respektive dem Brennraum des Brenners zurückgeführt werden. Damit wird eine besonders hohe Energieeffizient erreicht. Die Abgase können nämlich in der zweiten Wärmetauschereinheit nahezu auf Aussentemperatur respektive auf die Temperatur der in die zweite Wärmetauschereinheit einströmenden Aussenluft abgekühlt werden.

In Varianten kann auf das Umlenkblech auch verzichtet werden, insbesondere wenn die aus dem Abgasrohr austretenden Abgase aufgrund der Reinigung in der ersten Wärmetauschereinheit bereits einen genügend geringen Anteil an Schadstoffen respektive Feuchtigkeit enthalten. Das Umlenkblech könnte auch horizontal angeordnet werden. Eine Umlenkung könnte alternativ oder zusätzlich auch durch ein gekrümmtes Abgasrohr erreicht werden.

Vorzugsweise weist der Wärmetauscher der zweiten Wärmetauschereinheit ein Gehäuse mit einem Gehäuseboden auf, welcher Gehäuseboden ausgehend vom Abgasrohr aus in Richtung des Umlenkbleches eine Neigung aufweist und in einen Kondensatablauf mündet, wobei ein Winkel zwischen dem Gehäuseboden und einer horizontalen Ebene kleiner als 15°, bevorzugt kleiner als 8°, besonders bevorzugt ungefähr 3° ist. Die Neigung ist bevorzugt so gross gewählt, dass die Kondensate gut abfliessen können. Damit ist die Neigung insbesondere auch von der Beschaffenheit der Oberfläche des Gehäusebodens abhängig. Über den Kondensatablauf können die Kondensate aus dem Innenraum des Gehäuses entfernt werden. Der Kondensatablauf umfasst vorzugsweise eine Öffnung, welche zum Beispiel als Ventil, insbesondere als Hahn oder Schraubverschluss ausgebildet sein kann. Dem Fachmann sind dazu auch weitere Möglichkeiten bekannt. Die Öffnung muss dabei nicht zwingend verschliessbar sein, sondern kann in einen Kondensatauffangbehälter münden. Dazu kann der Kondensatablauf zum Beispiel ein Rückschlagventil umfassen, welches verhindert, dass die Kondensate verdunsten können.

In Varianten kann auf den geneigten Gehäuseboden auch verzichtet werden. Zum Beispiel könnte auch eine Wanne vorgesehen sein, in welcher die Kondensate aufgefangen werden.

Bevorzugt umfasst der Wärmetauscher der zweiten Wärmetauschereinheit ein Gebläse, welches insbesondere mit dem Abgasrohr kommuniziert.

Vorzugsweise umfasst das Rohr bzw. die Rohre eines Wärmetauschers, insbesondere das Rohr bzw. die Rohre des ersten und/oder des zweiten Wärmetauschers der ersten Wärmetauschereinheit Turbulatoren. Damit wird erreicht, dass die heissen Abgase während dem Durchströmen umgewälzt werden, wodurch ein Wärmekontakt des Abgasstroms mit den Rohrwandungen verbessert wird. Durch die Durchmischung kann ein Temperaturgradient zwischen dem heissen Abgasstrom zum Wärmeträgermedium möglichst hoch gehalten werden, womit sich ein verbesserter Wärmeübergang ergibt.

In Varianten kann auch auf die Turbulatoren verzichtet werden, insbesondere wenn die Strömungsgeschwindigkeit so hoch gewählt ist, dass Turbulenzen entstehen. Dabei ist aber zu beachten, dass für das Fördern der Medien mehr Energie aufgewendet werden muss. Schliesslich könnten auch die Rohrdurchmesser entsprechend klein gewählt werden. In beiden Fällen ist aber zu beachten, dass für das Fördern der Medien mehr Energie aufgewendet werden müsste.

Die Erfindung stellt in einer bevorzugten Ausführungsform auch einen Heizkessel bereit, welcher einen Brenner umfasst, insbesondere für Pellet und/oder Holzschnitzel, sowie einen Brennraum mit einem Auslass für einen Abgasstrom. Der Brennraum ist insbesondere zwischen den Brenner und den ersten Wärmetauschers zwischengeschaltet, wobei der Auslass des Brennraums mit einem Einlass der ersten Wärmetauschereinheit kommuniziert. Das erste Wärmeträgermedium ist im Heizkessel ausschliesslich durch die erste Wärmetauschereinheit des Wärmetauschersystems geführt, sodass ein Wärmeaustausch mit dem Abgasstrom ausschliesslich in der ersten Wärmetauschereinheit erfolgt.

Der Brenner ist vorzugsweise in bekannter Weise als Pellet-Brenner ausgebildet, insbesondere für Holzpellet oder Holzschnitzel. Der Brenner umfasst bevorzugt ein Gebläse zum Regulieren der Strömungsgeschwindigkeit der Brennluft und eine Fördereinrichtung für die Förderung der Pellet und/oder der Holzschnitzel in den Brennraum.

Bei herkömmlichen Heizungssystemen wird Wärme bereits direkt aus dem Brennraum an das erste Wärmeträgermedium abgeführt. Dies hat den Nachteil, dass der Brennraum abkühlt und damit die vollständige Verbrennung der Brennstoffe gehindert wird. Dadurch können die Abgase unverbrannte Kohlenwasserstoffe und weitere Schadstoffe enthalten, welche hinsichtlich der Energieeffizienz wie auch der Ökologie gering gehalten werden sollten und daher herkömmlich mittels Katalysatoren verbrannt oder mittels Filtersysteme aus den Abgasen abgetrennt werden mussten.

Erfindungsgemäss wird dem Brennraum Wärme einzig über den Abgasstrom entzogen, welcher über den Auslass aus dem Brennraum aus- und in die erste Wärmeträgereinheit eintritt. Im Gegensatz zu bekannten Heizkesseln, bei welchen bereits im Brennraum bzw. in einer Wandung des Brennraums ein Wärmeaustausch mit dem ersten Wärmeträgermedium stattfindet, kann erfindungsgemäss die Verbrennungstemperatur im Brennraum hoch und, aufgrund der so erreichten vollständigeren Verbrennung, ein Schadstoffausstoss gering gehalten werden.

Ein Wärmeträgerkreislauf für das erste Wärmeträgermedium, an welchen der Heizkessel angeschlossen ist (z. B. Heizungssystem eines Hauses), kommuniziert also einzig mit der ersten Wärmeträgereinheit, sodass das erste Wärmeträgermedium im Heizkessel ausschliesslich durch die erste Wärmetauschereinheit geführt ist.

Der Brennraum umfasst vorzugsweise ein Rezirkulationsrohr. Damit wird eine höhere Verbrennungstemperatur erreicht. Zudem kann damit ein Rauchgaskurzschluss in den ersten Wärmetauscher verhindert werden. Der Brennraum ist vorzugsweise mit Keramikfaserplatten isoliert, wobei dem Fachmann auch andere geeignete Materialien zur Wärmeisolation des Brennraums bekannt sind.

Bevorzugt umfasst das zweite Wärmeträgermedium Luft, insbesondere atmosphärische Luft.

In Varianten kann auch ein anderes zweites Wärmeträgermedium, wie zum Beispiel Wasser, Öl oder weitere dem Fachmann bekannte Wärmeträger eingesetzt werden.

Vorzugsweise ist der Brenner mit einem Wärmeträgerausgang des Wärmetauschers der zweiten Wärmetauschereinheit verbunden. Insbesondere bei einer Verwendung von Luft als zweites Wärmeträgermedium wird damit erreicht, dass die Restwärme mittels der Brennluft direkt in das System zurückgeführt werden kann. Dies ist insbesondere dann von Vorteil, wenn die Restwärme zu gering ist, um anderweitig verwertet zu werden.

In Varianten kann die Luft auch zur unterstützenden Beheizung eines Raumes oder anderweitig verwendet werden.

Bevorzugt sind der Brenner und der erste Wärmetauscher, die erste Wärmetauschereinheit und/oder das Wärmetauschersystem mittels einer gedachten Ebene durch einen Verbindungsbereich zwischen dem Brennraum und dem ersten Wärmetauscher trennbar.

In Varianten kann die Wärme auch direkt aus dem Brennraum abgeführt werden. In diesem Fall ist es aber von Vorteil, wenn eine hohe Brennraumtemperatur anderweitig aufrechterhalten werden kann. Dies könnte zum Beispiel mittels Umwälzung der Brennluft oder der Abgase im Brennraum bewerkstelligt werden.

Vorzugsweise umfasst der Brenner ein Gebläse für die Förderung und Steuerung eines Volumenstromes der Brennluft. Die Förderung der Brennluft kann dabei mittels einer Luftpumpe, insbesondere mittels eines Kompressors erfolgen, welche dem Fachmann hinreichend bekannt sind. Die Steuerung erfolgt bevorzugt mittels geeigneter Ventile. Damit kann eine Verbrennungstemperatur im Brennraum und damit auch in den Wärmetauschern gesteuert werden. Weiter kann dadurch eine geringe Strömungsgeschwindigkeit der Brennluft im Glutbett des Brennraums erreicht werden, sodass die Strömung im Glutbett weitgehend laminar erfolgt. Dadurch werden auch möglichst wenige unvergaste Partikel respektive unverbrannte Kohlenwasserstoffe durch die Abgase aus dem Brennraum abgeführt. Bei einer Primärverbrennung fällt vorerst eine hohe Konzentration an Kohlenmonoxid an, welche anschliessend durch eine Sekundärluftzufuhr nahezu vollständig zu Kohlendioxid oxidiert werden können. Nach der Oxidation der Kohlenmonoxide werden die heissen Abgase in den ersten Wärmetauscher der ersten Wärmetauschereinheit geleitet.

Bevorzugt sind die Bereiche der Wärmetauschereinheiten, welche mit dem heissen Abgasstrom in Kontakt kommen können, aus rostfreiem Stahl, insbesondere aus Edelstahl ausgebildet. Bei der Verbrennung von Holz (Holzpellet, Holzschnitzel, etc.) entstehen Nichtmetalloxide, welche mit dem Kondenswasser zu Säuren reagieren können, welche bekanntermassen mit vielen Materialien korrosiv reagieren können. Die Verwendung von Edelstahl in den Bereichen der Wärmetauschereinheiten, welche mit dem Abgasstrom in Berührung kommen, hat den Vorteil, dass Edelstahl gegenüber den meisten Säuren resistent ist und eine gute Wärmeleitfähigkeit aufweist.

In Varianten sind auch andere Materialien denkbar. Insbesondere können auch bereichsweise, zum Beispiel in Abhängigkeit der vorherrschenden Temperatur während des Betriebes, verschiedene Materialien eingesetzt werden. Vorzugsweise sind die eingesetzten Materialien jedoch korrosionsbeständig. So können zum Beispiel auch Materialien wie Email, Kunststoff, Glas, Siliziumcarbid etc. eingesetzt werden.

Aus der nachfolgenden Detailbeschreibung und der Gesamtheit der Patentansprüche ergeben sich weitere vorteilhafte Ausführungsformen der Erfindung.

### Kurze Beschreibung der Zeichnungen

Die zur Erläuterung des Ausführungsbeispiels verwendeten Zeichnungen zeigen:
- Fig. 1: eine schematische Schrägansicht eines erfindungsgemässen Wärmetauschersystems mit einem Brenner;
- Fig. 2: eine schematische Frontansicht eines erfindungsgemässen Wärmetauschersystems mit einem Brenner;
- Fig. 3: eine schematische Seitenansicht eines erfindungsgemässen Wärmetauschersystems mit einem Brenner;
- Fig. 4: eine schematische Draufsicht auf ein erfindungsgemässes Wärmetauschersystem mit einem Brenner;
- Fig. 5: eine vereinfachte Schnittansicht des Wärmetauschersystems in einer vertikalen Ebene, entlang einer Längsachse, mittig durch die erste Wärmetauschereinheit;
- Fig. 6: eine vereinfachte Schnittansicht des Wärmetauschersystems in einer vertikalen Ebene, entlang einer Längsachse, mittig durch die zweite Wärmetauschereinheit;
- Fig. 7: eine Schnittansicht des Wärmetauschersystems mit einem Brenner in einer vertikalen Ebene, entlang einer Längsachse, mittig durch die erste Wärmetauschereinheit des Wärmetauschersystems;
- Fig. 8: eine Schnittansicht des Wärmetauschersystems mit einem Brenner in einer vertikalen Ebene, entlang einer Längsachse des Wärmetauschersystems, mittig durch die zweite Wärmetauschereinheit;
- Fig. 9: eine Schnittansicht des Wärmetauschersystems in einer vertikalen Ebene, mittig und rechtwinklig zu einer Längsachse des zweiten Wärmetauschers,;
- Fig. 10: eine Schnittansicht des Wärmetauschersystems in einer horizontalen Ebene, mittig und rechtwinklig zu einer Längsachse des Wärmetauschersystems, durch die erste und die zweite Wärmetauschereinheit;

Grundsätzlich sind in den Figuren gleiche Teile mit gleichen Bezugszeichen versehen.

### Wege zur Ausführung der Erfindung

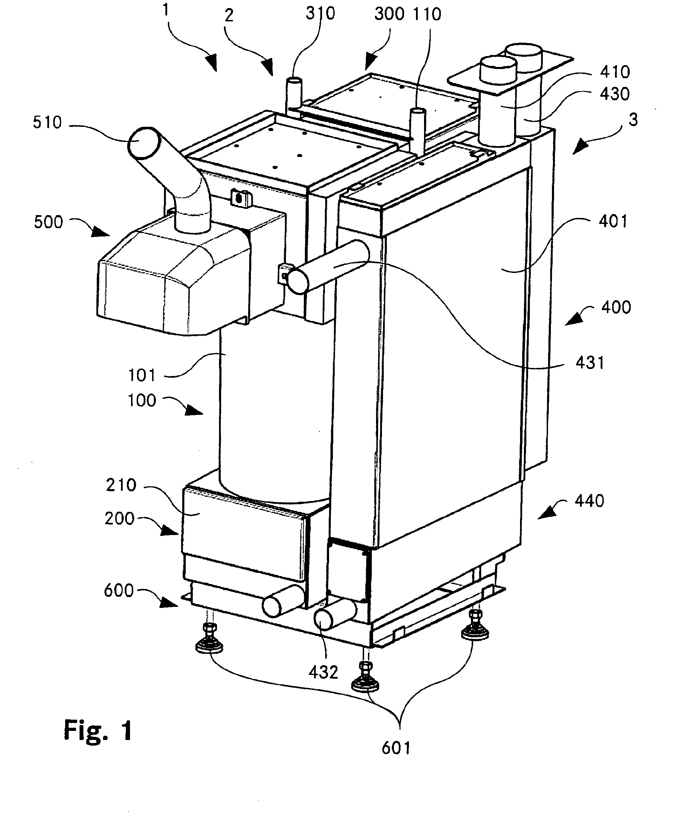

Die Figur 1 zeigt eine schematische Schrägansicht eines erfindungsgemässen Wärmetauschersystems 1 mit einem Brenner 500. Das Wärmetauschersystem 1 umfasst zwei Wärmetauschereinheiten 2, 3, wobei die erste Wärmetauschereinheit 2 einen ersten Wärmetauscher 100 und einen zweiten Wärmetauscher 300 umfasst und die zweite Wärmetauschereinheit 3 als Rekuperator ausgebildet ist. Der erste Wärmetauscher 100 und der zweite Wärmetauscher 300 sind benachbart angeordnet und die zweite Wärmetauschereinheit 3 ist neben den beiden Wärmetauschern 100, 300 so angeordnet, dass das Wärmetauschersystem 1 im Wesentlichen eine rechteckige Grundfläche einnimmt.

In einem vertikal oberen Bereich zwischen dem ersten Wärmetauscher 100 und dem zweiten Wärmetauscher 300 sind der Rücklauf 310 und der Vorlauf 110 des ersten Wärmeträgermediums angeordnet, wobei in der vorliegenden Ausführungsform als erstes Wärmeträgermedium Heizungswasser vorgesehen ist, welches zur Beheizung eines Raumes, für den Betrieb eines Warmwasserboilers oder dergleichen verwendet werden kann. Der Rücklauf 310 ist dabei mit dem zweiten Wärmetauscher 300 verbunden und der Vorlauf 110 ist mit dem ersten Wärmetauscher 100 verbunden. In einem vertikal unteren Bereich zwischen den Wärmetauschern befindet sich ein Durchgang (nicht ersichtlich) für das Wärmeträgermedium, welcher entweder als Öffnung zwischen den sich berührenden ersten und zweiten Wärmetauscher oder als kurze Rohrleitung ausgebildet sein kann.

Der erste und der zweite Wärmetauscher 100, 300 sind in einem vertikal unteren Bereich über eine Umlenkung 200 verbunden. Die Umlenkung 200 ist im Wesentlichen als Quader ausgebildet, welcher eine verschliessbare Öffnung 210 umfasst. Durch die Umlenkung 200 wird der Abgasstrom umgelenkt, womit durch die radiale Beschleunigung und die Schwerkraft Aschepartikel und Feinstaub von den Abgasen abgetrennt und in der Umlenkung 200 aufgefangen und durch die verschliessbare Öffnung 210 aus dem Innenraum der Umlenkung 200 ausgetragen werden können.

Der erste Wärmetauscher 100 ist in einem vertikal oberen Bereich mit einem Brenner 500 verbunden. Der Brenner 500 umfasst einen Brennstoffeingang 510, über welchen Pellet, insbesondere Holzpellet und/oder Holzschnitzel von oben in den Brenner gefördert werden können. Eine Fördereinheit für die Pellet und/oder Holzschnitzel (nicht dargestellt) kann in bekannter Weise zum Beispiel als Schneckenförderer ausgebildet sein.

Die zweite Wärmetauschereinheit 3 umfasst einen vertikal unten angeordneten Brennlufteingang (nicht ersichtlich) und einen vertikal oben angeordneten Brennluftausgang 431. Der Brennluftausgang 431 wird mit einem Brennlufteingang des Brenners 500 verbunden (nicht dargestellt). Damit kann eine Restwärme des Abgasstromes über die Brennluft dem Brenner 500 zurückgeführt werden. Die zweite Wärmetauschereinheit 3 umfasst weiter in einem vertikal unteren Bereich eine Umlenkung 440 zum Umlenken des Abgasstromes. In der Umlenkung 440 werden wiederum mittels der radialen Beschleunigung und der Schwerkraft Feinstaub, Asche und Kondensate aus den Abgasen abgeschieden. Schliesslich umfasst die zweite Wärmetauschereinheit 3 Abgasrohre 410 zum Abführen der abgekühlten Abgase. Die Abgasrohre 410 können mit einem Kamin (nicht dargestellt) kommunizieren.

Das Wärmetauschersystem 1 mit dem Brenner 500 steht in der vorliegenden Ausführungsform als Ganzes auf einem Untergestell 600, welches vier Füsse 601 umfasst. Die Füsse 601 weisen ein Schraubengewinde auf, welches in entsprechende Hülsen mit Innengewinde des Untergestells 600 eingeschraubt werden können, so dass das Untergestell 600 auch auf nicht exakt horizontalen, respektive nicht exakt flachen Unterlagen dennoch horizontal ausgerichtet werden kann.

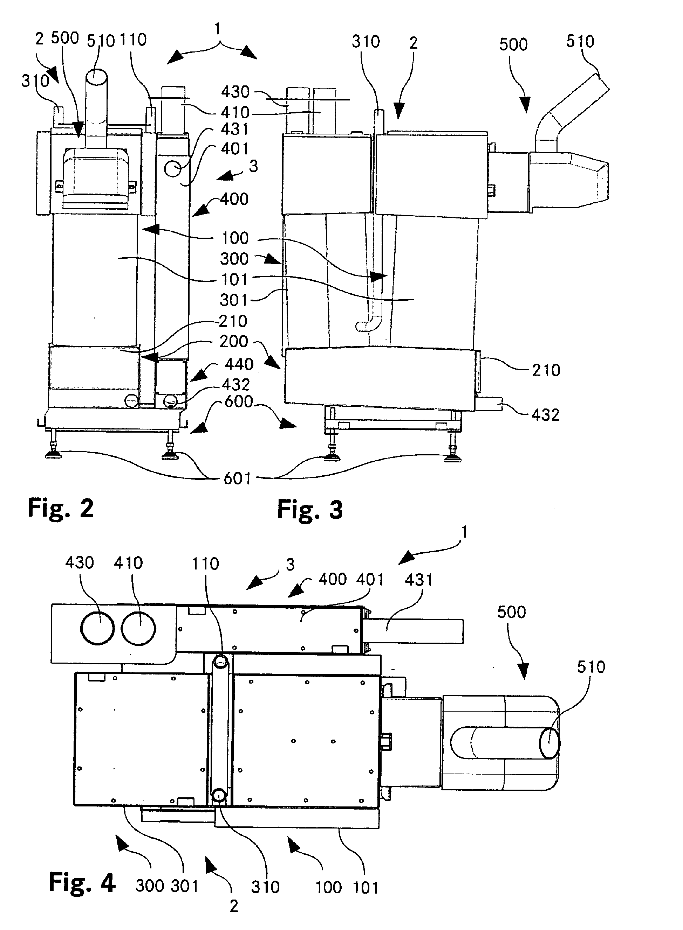

Die Figuren 2 und 3 zeigen eine schematische Frontansicht und eine schematische Seitenansicht eines erfindungsgemässen Wärmetauschersystems 1 mit einem Brenner 500 gemäss der Figur 1. Die Figur 3 zeigt insbesondere eine Seitenansicht auf die erste Wärmetauschereinheit 2 des Wärmetauschersystems 1. Dabei ist ersichtlich, dass der erste und der zweite Wärmetauscher 100, 300 zueinander V-förmig angeordnet sind, wobei die Öffnung der V-Form vertikal oben ist. Durch diese Anordnung werden Dampfschläge des ersten Wärmeträgermediums respektive des Heizungswassers verhindert. Der erste und der zweite Wärmetauscher 100, 300 weisen im Wesentlichen die Form eines geraden Kreiszylinder auf. Um die V-Form zu erreichen ist die Umlenkung 200 giebelförmig ausgebildet, wobei der erste Wärmetauscher 100 auf einer Flanke des Giebels und der zweite Wärmetauscher auf einer zweiten Flanke des Giebels zu liegen kommt. Weiter ist ersichtlich, dass der Boden der Umlenkung 440 der zweiten Wärmetauschereinheit 3 geneigt ist, wodurch sich durch die Abkühlung der Abgase bildende Kondensate hin zu einem Ausguss fliessen können. Der Neigungswinkel beträgt ungefähr 3°.

Die Figur 4 zeigt eine schematische Draufsicht auf ein erfindungsgemässes Wärmetauschersystem 1 mit einem Brenner 500 gemäss Figur 1, wobei die Abgasrohre 410, die beiden Wärmetauscher 100, 300 der ersten Wärmetauschereinheit 2 und der Wärmetauscher respektive der Rekuperator der zweiten Wärmetauschereinheit 3 ersichtlich sind.

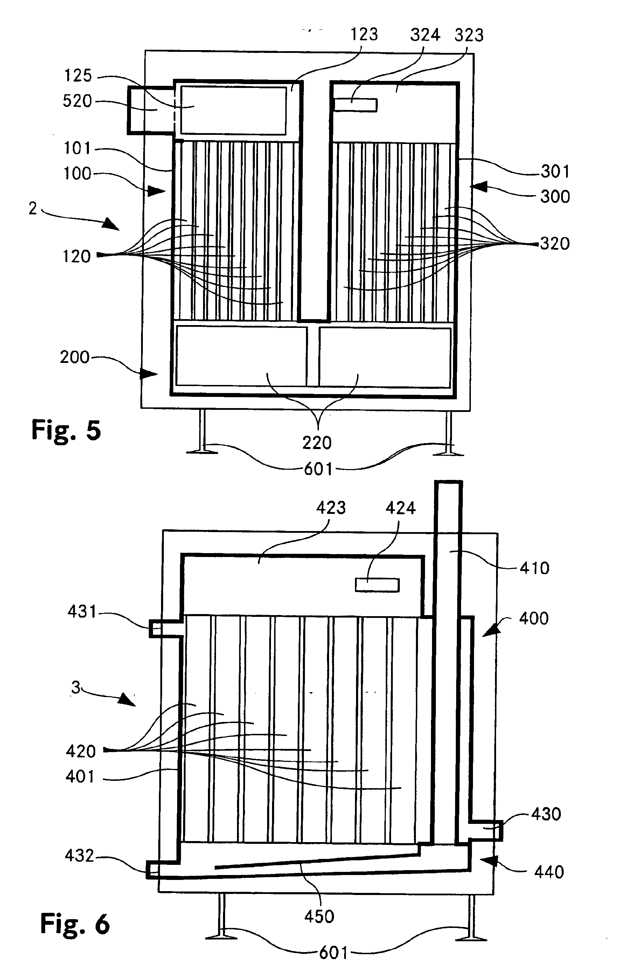

Die Figur 5 zeigt eine vereinfachte Schnittansicht des Wärmetauschersystems 1 in einer vertikalen Ebene, entlang einer Längsachse, mittig durch die erste Wärmetauschereinheit 2. Der erste und der zweite Wärmetauscher 100, 300 der ersten Wärmetauschereinheit 2 sind über eine Umlenkung 200 in einem vertikal unteren Bereich miteinander verbunden. Der erste und der zweite Wärmetauscher 100, 300 umfassen jeweils vertikal und parallel zueinander angeordnete Rohre 120, 320 zur Durchführung der heissen Abgase. Die Rohre 120, 320 sind in der vorliegenden Ausführungsform aus Edelstahl, zum Beispiel aus Chromstahl, ausgebildet. Die Rohre 120, 320 weisen an deren Innenseiten Turbulatoren auf (nicht dargestellt), womit durchströmende Abgase umgewälzt werden können und damit eine effiziente Wärmeübertragung an die Rohrwände der Rohre 120, 320 erreicht werden kann. Die Turbulatoren sind auch aus korrosionsbeständigem Material, insbesondere auch aus Edelstahl aus gebildet. Benachbarte Rohre 120 respektive 320 eines Wärmetauschers weisen zueinander jeweils einen konstanten Abstand auf. Die Wärmetauscher 100; 300 weisen weiter jeweils eine untere Lochblende 121; 321 und eine obere Lochblende 122; 322 auf, welche im Wesentlichen als kreisrunde Edelstahlplatten mit mehreren, einem Durchmesser der Rohre 120; 320 entsprechenden Öffnungen ausgebildet sind. Die vertikal unteren Rohrenden der Rohre 120; 320 des Wärmetauschers 100; 300 sind jeweils mit einer Öffnung einer unteren Lochblende 121; 321 und die vertikal oberen Rohrenden sind jeweils mit den entsprechenden Öffnungen der oberen Lochblende 122; 322 verbunden. Die Lochblenden 121, 122 respektive 321, 322 sind jeweils über deren Randbereich mit einem aussenseitig wärmeisolierten Gehäuse 101 respektive 301 verbunden, so dass sich zwischen den Rohren 120; 320, den Lochblenden 121, 122; 321, 322 und dem Gehäuse 101; 301 ein Strömraum für das Heizungswasser bildet. Die Gehäuse 101; 301 weisen weiter jeweils in einem vertikal oberen und unteren Bereich eine Öffnung auf (nicht ersichtlich), welche mit diesem Strömraum kommunizieren. Die vertikal unten angeordneten Öffnungen sind miteinander verbunden, so dass das Heizungswasser vom Strömraum des einen Wärmetauschers 100 respektive 300 zum Strömraum des andern Wärmetauschers 300 respektive 100 fliessen kann.

Die Gehäuse 101 und 301 sind im Wesentlichen als gerade, einseitig geschlossene Kreiszylinder ausgebildet, wobei das offene Ende jeweils durch die unteren Lochblenden 121; 321 verschlossen sind und wobei die oberen Lochblenden bezüglich des geschlossenen Endes des Gehäuses 101; 301 beabstandet angeordnet ist. Die Gehäuse 101 und 301 weisen dadurch jeweils über den oberen Lochblenden 122; 322 einen Raum 123; 323 auf. Der Brennraum 520 kommuniziert mit dem Raum 123 über der oberen Lochblende 122 des ersten Wärmetauschers 100. Der Raum 323 über der oberen Lochblende 322 weist eine Ausgangsöffnung 324 für die Abgase auf.

Die beiden Wärmetauscher 100 und 300 sind über eine Umlenkung 200 in einem vertikal unteren Bereich miteinander so verbunden, dass die Innenräume der Rohre 120 und 320 mit dem Innenraum der Umlenkung 200 kommuniziert. Die Umlenkung 200 ist im Wesentlichen als Quader aus Edelstahl ausgebildet und ist aussenseitig wärmeisoliert.

In der vorliegenden Ausführungsform wird im Brennraum 520 mittels des in Figur 5 nicht dargestellten Brenners ein heisser Abgasstrom erzeugt und über den Raum 123 des ersten Wärmetauschers 100 in die Rohre 120 des ersten Wärmetauschers 100 geleitet. Die heissen Abgase strömen in den Rohren 120 vertikal nach unten (Sturzzüge) in die Umlenkung 200 und werden anschliessend, nach einer Umlenkung, in einem vertikal unteren Bereich in die Rohre 320 des zweiten Wärmetauschers 300 geleitet. Dort strömen die Abgase vertikal nach oben (Steigzüge), gelangen in den Raum 323 des zweiten Wärmetauschers 300, um schliesslich durch die Ausgangsöffnung 324 in die zweite Wärmetauschereinheit 3 respektive in den Rekuperator zu gelangen.

Das Heizungswasser wird gleichzeitig zwischen den Rohren 320 des zweiten Wärmetauschers 300 vertikal nach unten geführt. Im vertikal unten angeordneten Verbindungsbereich zwischen den Innenräumen der Wärmetauscher gelangt das Heizungswasser in den ersten Wärmetauscher 100 und steigt in diesem vertikal nach oben. Die Abgase und das Heizungswasser sind dadurch in Gegenstrom geführt.

Die Figur 6 zeigt eine vereinfachte Schnittansicht des Wärmetauschersystems 1 in einer vertikalen Ebene, entlang einer Längsachse, mittig durch die zweite Wärmetauschereinheit 3. Der Wärmetauscher 400 (Rekuperator) umfasst vertikal und parallel zueinander angeordnete Rohre 420 zur Durchführung der heissen Abgase. Die Rohre 420 sind in der vorliegenden Ausführungsform aus Edelstahl, zum Beispiel aus Chromstahl, ausgebildet. Die Rohre 420 weisen an deren Innenseiten Turbulatoren auf (nicht dargestellt). Die Turbulatoren sind auch aus korrosionsbeständigem Material, insbesondere auch aus Edelstahl ausgebildet. Benachbarte Rohre 420 weisen zueinander jeweils einen konstanten Abstand auf. Der Wärmetauscher 400 umfasst eine untere Lochblende 421 und eine obere Lochblende 422, welche jeweils im Wesentlichen als rechteckige Edelstahlplatten mit mehreren, einem Durchmesser der Rohre 420 entsprechenden Öffnungen ausgebildet sind. Die vertikal unteren Rohrenden der Rohre 420 sind jeweils mit einer Öffnung der unteren Lochblende 421 und die vertikal oberen Rohrenden sind jeweils mit den entsprechenden Öffnungen der oberen Lochblende 422 verbunden. Ein randständig angeordnetes Rohr ist dabei als Abgasrohr 410 ausgebildet und ragt, im Unterschied zu den Rohren 420, über die obere Lochblende 422 hinaus. Die Lochblenden 421, 422 sind jeweils über deren Randbereich mit einem aussenseitig wärmeisolierten Gehäuse 401 so verbunden, dass sich zwischen den Rohren 420, den Lochblenden 421, 422 und dem Gehäuse 401 ein Innenraum für die Durchführung der Brennluft bildet. Dazu umfasst das Gehäuse 401 einen Brennlufteingang 430 und einen Brennluftausgang 431, welche mit diesem Innenraum kommunizieren. Der Brennlufteingang 430 ist dabei im Bereich der unteren Lochblende 421 und des Abgasrohres 410 angeordnet. Der Brennluftausgang 431 1 ist bezüglich des Innenraums dem Brennlufteingang 430 gegenüberliegend, unterhalb der oberen Lochblende 422 angeordnet.

Das Gehäuse 401 ist im Wesentlichen quaderförmig ausgebildet, wobei über der oberen Lochblenden 422 ein quaderförmiger Raum 423 vorhanden ist, welcher eine Eingangsöffnung 424 für die Abgase aufweist. Der Raum 423 kommuniziert mit den Öffnungen der oberen Lochblende 422, nicht aber mit dem Abgasrohr 410. Der Raum 423 befindet sich damit neben dem, über die obere Lochblende 422 hinausragenden Bereich des Abgasrohres 410. Unterhalb der unteren Lochblende 421 umfasst das Gehäuse 401 eine Umlenkung 440, welche als ein weiterer quaderförmiger Raum ausgebildet ist. Die Rohre 420 und das Abgasrohr 410 kommunizieren mit diesem Raum der Umlenkung 440, das heisst, der Raum der Umlenkung 440 wird oben durch die untere Lochblende 421 begrenzt. Die Umlenkung 440 umfasst in einem Bereich einer unteren Kante, dem Abgasrohr 410 gegenüberliegend, einen Kondensatausguss 432. Der Boden der Umlenkung 440 neigt sich hin zum Kondensatausguss 432, so dass sich sammelndes Kondensat in Richtung des Kondensatausgusses 432 abfliessen kann.

Das Abgasrohr 410 umfasst an seinem vertikal unteren Ende, innerhalb des Raumes der Umlenkung 440 ein Umlenkblech 450, welches sich in Richtung des Kondensatausgusses 432 neigt, wobei der Neigungswinkel ungefähr 3° beträgt. Das Umlenkblech 450 ist dabei so dimensioniert, dass sich von den Rohren 420 aus lediglich ein schmaler Durchgang im Bereich des Kondensatausgusses 432 ergibt, so dass ein Abgasstrom durch den schmalen Durchgang hin zum Abgasrohr 410 leitbar ist. Eine Breite des schmalen Durchgangs liegt ungefähr in einem Bereich eines Durchmessers eines Rohrs 420.

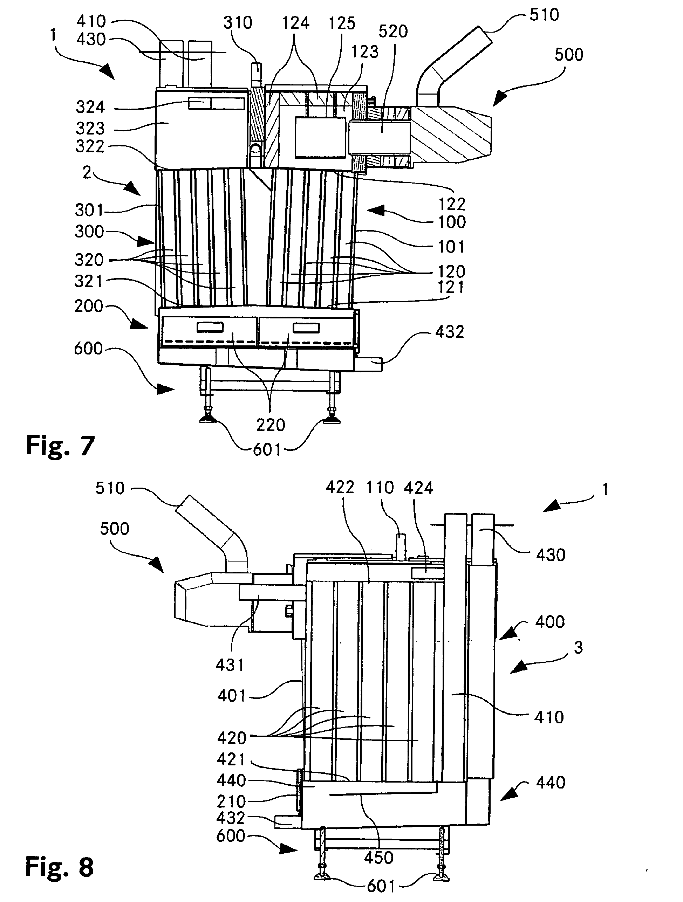

Die Figur 7 zeigt eine Schnittansicht des Wärmetauschersystems 1 mit einem Brenner 500 in einer vertikalen Ebene, entlang einer Längsachse des Wärmetauschersystems 1, mittig durch die erste Wärmetauschereinheit 2. Die Figur 7 zeigt insbesondere eine detaillierte Ansicht gemäss Figur 5. Der Brenner 500 umfasst einen Brennstoffeingang 510 für Pellet oder Holzschnitzel, sowie einen Brennraum 520, welcher mit dem Raum 123 des ersten Wärmetauschers kommuniziert. Der Raum 123 ist inwändig mit Keramikplatten 124 isoliert und umfasst ein als Rezirkulationsrohr 125 ausgebildetes Rohr, welches dem Brennraum 520 mit geringem Abstand nachgeschaltet ist. Damit wird eine Erhöhung der Verbrennungstemperatur erreicht. Weiter kann damit ein Rauchgaskurzschluss im ersten Wärmetauscher 100 verhindert werden. Weiter ist in der Figur 7 ersichtlich, dass die Rohre 120 des ersten Wärmetauschers 100 zu den Rohren 320 des zweiten Wärmetauschers 300 V-förmig angeordnet sind, womit Dampfschläge verhindert werden können. Ein Winkel zwischen den Rohren 120 und den Rohren 320 beträgt dabei ungefähr 5°. Der Rücklauf 310 des ersten Wärmeträgermediums respektive des Heizungswassers, ist in einem vertikal oberen Bereich des zweiten Wärmetauschers 300, zwischen dem ersten und dem zweiten Wärmetauscher 100, 300 angeordnet. Der Vorlauf 110 des ersten Wärmeträgermediums ist auch zwischen dem ersten und dem zweiten Wärmetauscher 100, 300 angeordnet, kommuniziert jedoch mit dem ersten Wärmetauscher 100. Die Umlenkung 200 umfasst in der vorliegenden Ausführungsform zwei Behälter 220, welche durch die verschliessbare Öffnung 210 aus dem Innenraum der Umlenkung 200 entnehmbar sind. Mittels dieser Behälter 220 werden Asche, Feinstaub und ein erster Anteil an Kondensaten aufgefangen respektive ausgetragen.

Der Brenner 500 umfasst ein Gebläse (nicht dargestellt), mit welchem die Strömungsgeschwindigkeit im Brennraum 520 gesteuert werden kann.

Die Figur 8 zeigt eine Schnittansicht des Wärmetauschersystems 1 mit einem Brenner 500 in einer vertikalen Ebene, entlang einer Längsachse des Wärmetauschersystems 1, mittig durch die zweite Wärmetauschereinheit 3. Die Figur 8 zeigt die Rückseite der detailierteren Darstellung gemäss Figur 7 und entspricht im Wesentlichen der Figur 6.

Die zweite Wärmetauschereinheit 3 umfasst ein weiteres Gebläse (nicht dargestellt), welches insbesondere mit dem Abgasrohr 410 verbunden ist und so die abgekühlten Abgase fördern kann.

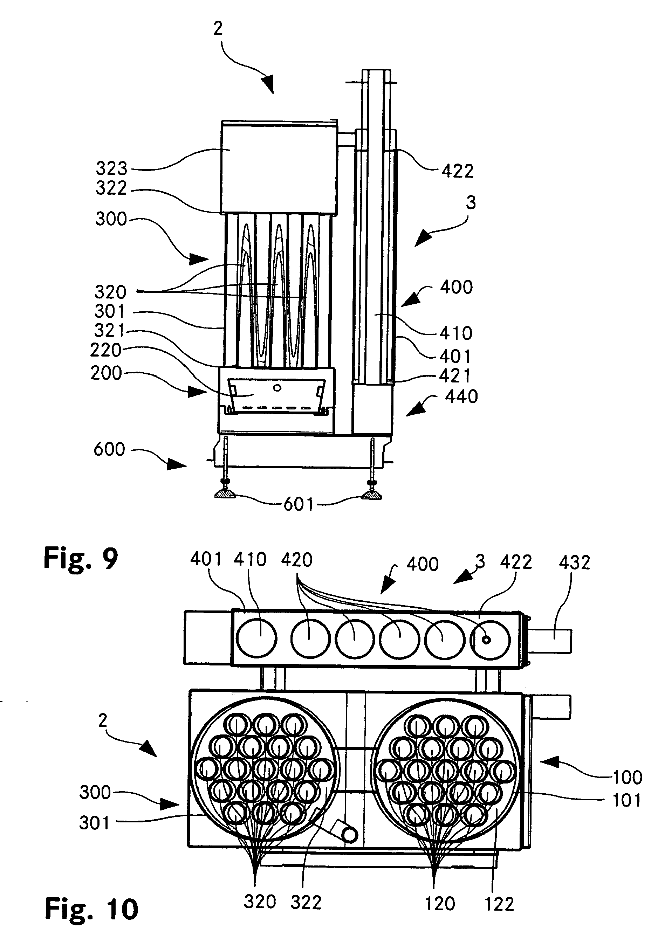

Die Figur 9 zeigt eine Schnittansicht in einer vertikalen Ebene mittig und rechtwinklig zu einer Längsachse des zweiten Wärmetauschers 300 des Wärmetauschersystems 1. Dabei ist ersichtlich, dass die Behälter 220 in der Umlenkung 200 Rollen aufweisen, so dass die Behälter besonders komfortabel durch die verschliessbare Öffnung 210 aus der Umlenkung 200 entnommen werden können.

Die Figur 10 zeigt eine Schnittansicht in einer horizontalen Ebene mittig und rechtwinklig zu einer Längsachse des Wärmetauschersystems 1, durch die erste und die zweite Wärmetauschereinheit 2, 3 des Wärmetauschersystems 1. Der erste und der zweite Wärmetauscher 100, 300 umfassen in der vorliegenden Ausführungsform je 19 Rohre 120 respektive 320. Die Rohre 120 respektive 320 sind jeweils so angeordnet, dass ein horizontaler Querschnitt im Wesentlichen die Form eines Sechsecks aufweist. Die Rohre 420 und das Abgasrohr 410 des Wärmetauschers 400 sind hingegen parallel zueinander in einer Reihe angeordnet. Der Wärmetauscher 400 umfasst in der vorliegenden Ausführungsform fünf Rohre 420, welche einen grösseren Durchmesser als die Rohre 120, 320 aufweisen. Der Durchmesser des Abgasrohres 410 entspricht im Wesentlichen dem Durchmesser der Rohre 420.

Die Rohre 120, 320 weisen eine Länge von ca. 680 mm und einen Durchmesser von ca. 60 mm auf, wobei benachbarte Rohre 120 respektive 320 einen Abstand von ca. 20 mm aufweisen. Die Rohre 420 und das Abgasrohr 410 weisen eine Länge von ca. 1040 mm und einen Durchmesser von ca. 110 mm auf, wobei benachbarte Rohre 420 einen Abstand von ca. 20 mm aufweisen. Das Rezirkulationsrohr weist eine Länge von ca. 250 mm und einen Durchmesser von ca. 200 mm auf. Der Innenraum des Raumes 123, welcher dem Brennraum 520 nachgeschaltet ist, weist eine Höhe von ca. 330 mm, eine Länge von ca. 370 mm und eine Breite von ca. 320 mm auf. Der Innenraum des Raumes 323 weist eine Höhe von ca. 380 mm, eine Länge von ca. 450 mm und eine Breite von ca. 470 mm auf. Der Innenraum der Umlenkung 200 der ersten Wärmetauschereinheit 2 weist eine Höhe von ca. 320 mm, eine Länge von ca. 980 mm und eine Breite von ca. 470 mm auf. Der Innenraum der Umlenkung 440 der zweiten Wärmetauschereinheit 3 weist eine Höhe von ca. 230 mm, eine Länge von ca. 850 mm und eine Breite von ca. 175 mm auf.

Die Rohre 120, 320, 420 und die Gehäuse 101, 301, 401 der Wärmetauscher 100, 300, 400, sowie die Umlenkungen 200, 440, das Umlenkblech 450, die Lochblenden 121, 122, 321, 322, 421, 422 bestehen in der vorliegenden Ausführungsform aus Edelstahl, sie können aber auch aus anderen Stahlsorten oder aus weiteren Stoffen aufgebaut sein, welche eine hinreichende Korrosions- und Temperaturbeständigkeit aufweisen. Auch die Anzahl und/oder die Anordnung der Rohre 120, 320, 420 können vom obigen Ausführungsbeispiel abweichen.

Die aussenseitigen Wärmeisolationen der Wärmetauscher 100, 300 und der Umlenkungen 200, 440 können auf dem Fachmann bekannte Weisen vorgenommen werden. Beispielsweise kann dazu Steinwolle, Glaswolle, Porenbeton, Bimsstein, Calciumsilikat-Platten etc. eingesetzt werden. Je nach auftretender Betriebstemperatur der Bereiche der Wärmetauschereinheiten können auch verschiedene Materialien eingesetzt werden.

Die Anordnung der Wärmetauschereinheiten 2, 3 kann auch anderweitig erfolgen, insbesondere kann die Anordnung der Wärmetauschereinheiten 2, 3 respektive der Wärmetauscher 100, 300, 400 auch einem zur Verfügung stehenden Platz angepasst sein. Die obig beschriebene Anordnung zeigt jedoch eine besonders kompakte Bauform, womit Verbindungsbereiche zwischen den Wärmetauschern 100, 300, 400 kurz und damit ein Wärmeverlust gering gehalten werden kann.

Der Brenner 500 ist gemäss den Figuren lediglich als schematische Darstellung zu verstehen und stellt keine Einschränkung dar. Dem Fachmann sind weitere Brenner 500 bekannt, welche für die obig beschriebene Vorrichtung geeignet sind. Statt der Keramikplatten 124 können auch andere Materialien zur Isolation des Raumes 123 vorgesehen sein.

Das Wärmetauschersystem 1 ist bezüglich eines Einsatzes nicht auf Beheizungen von Räumen oder Wasser eingeschränkt, sondern kann auch für beliebige Einrichtungen eingesetzt werden, welche mit Wärme versorgt werden müssen. Zum Beispiel könnte damit auch die Wärmemenge eines Abgasstromes eines Verbrennungsmotors (Schiffsmotor, Stromgeneratoren, Notstromaggregate, Motorfahrzeuge etc.), einer Kerichtverbrennungsanlage etc. zurückgewonnen werden. Dem Fachmann sind auch weitere Einsatzgebiete für ein solches Wärmetauschsystem bekannt.

Zusammenfassend ist festzustellen, dass durch die Erfindung ein Wärmetauschersystem für einen Pellet- und/oder Holzschnitzelbrenner geschaffen wurde, welches eine besonders hohe Energieeffizienz aufweist und sich durch einen besonders schadstoffarmen Abgasausstoss auszeichnet. Insbesondere wurde durch die Erfindung ein Wärmetauschsystem geschaffen, bei welchem auf den Einsatz von Abgasfilter verzichtet werden kann.

## Patentansprüche

1. Wärmetauschersystem (1), insbesondere für einen Pellet- und/oder Holzschnitzelofen, zum Anschluss an ein Heizungssystem umfassend
a) eine erste Wärmetauschereinheit (2) zum Austausch von Wärmenergie zwischen einem heissen Abgasstrom und einem ersten Wärmeträgermedium,
b) eine zweite Wärmetauschereinheit (3) zum Austausch von Wärmenergie zwischen dem heissen Abgasstrom und einem zweiten Wärmeträgermedium, wobei
c) die erste Wärmetauschereinheit (2) einen ersten und einen zweiten Wärmetauscher (100, 300) umfasst, durch welche der heisse Abgasstrom nach Eintritt in die erste Wärmetauschereinheit (2) in Serie geführt ist, und
d) die zweite Wärmetauschereinheit (3) einen Wärmetauscher (400) umfasst, durch welchen der heisse Abgasstrom nach Eintritt in die zweite Wärmetauschereinheit (3) geführt ist;
e) die zweite Wärmetauschereinheit (3) der ersten Wärmetauschereinheit (2) in Strömrichtung des heissen Abgasstromes nachgeschaltet ist; und wobei
f) die Wärmetauscher (100, 300, 400) der ersten und der zweiten Wärmetauschereinheit (2, 3) jeweils wenigstens ein Rohr (120, 320, 420) zum
Durchführen des heissen Abgasstroms und einen Strömraum für das jeweilige Wärmträgermedium umfassen, wobei das wenigstens eine Rohr (120, 320, 420) jeweils im Strömraum angeordnet und bevorzugt im Wesentlichen vertikal ausgerichtet ist;
**dadurch gekennzeichnet, dass**
g) der erste und der zweite Wärmetauscher (100, 300) der ersten Wärmetauschereinheit (2) V-förmig zueinander angeordnet sind.

2. Wärmetauschersystem (1) nach Anspruch 1, **dadurch gekennzeichnet, dass** die erste Wärmetauschereinheit (2) jeweils einen Anschluss für einen Vorlauf (110) und einen Rücklauf (310) eines Heizungssystems aufweist, welches mit dem ersten Wärmeträgermedium betrieben ist, wobei das erste Wärmeträgermedium zwischen Vorlauf (110) und Rücklauf (310) ausschliesslich durch die erste Wärmetauschereinheit (2) geführt ist.

3. Wärmetauschersystem (1) nach Anspruch 1 oder 2, **dadurch gekennzeichnet, dass** das erste Wärmeträgermedium im Wesentlichen Wasser, insbesondere Heizungswasser für eine Heizung, umfasst und das zweite Wärmeträgermedium im Wesentlichen Luft, insbesondere Verbrennungsluft für einen Brenner (500), umfasst.

4. Wärmetauschersystem (1) nach einem der Ansprüche 1 bis 3, **dadurch gekennzeichnet, dass** mindestens ein Wärmetauscher der ersten Wärmetauschereinheit (2) und/oder der zweiten Wärmetauschereinheit (3) als Gegenstromwarmetauscher ausgebildet ist.

5. Wärmetauschersystem (1) nach einem der Ansprüche 1 bis 4, **dadurch gekennzeichnet, dass** die Wärmetauscher (100, 300) der ersten Wärmetauschereinheit jeweils ein Gehäuse (101, 301) aufweisen, welches im Wesentlichen als Kreiszylinder ausgebildet ist und in welchem das Rohr (120, 320) längsparallel angeordnet ist.

6. Wärmetauschersystem (1) nach einem der Ansprüche 1 bis 5, **dadurch gekennzeichnet, dass** die Wärmetauscher (100, 300, 400) der ersten und/oder der zweiten Wärmetauschereinheit (2, 3) jeweils mehrere Rohre (120, 320, 420) zum Durchführen des heissen Abgasstroms umfassen, wobei die mehreren Rohre (120, 320, 420) eines Wärmetauschers (100, 300, 400) untereinander parallel und insbesondere berührungsfrei angeordnet und vorzugsweise kreiszylindrisch ausgebildet sind und insbesondere die Rohre (120, 320) der Wärmetauscher (100, 300) der ersten Wärmetauschereinheit (2) in einem Raster gemäss einem regelmässigen Vieleck angeordnet sind.

7. Wärmetauschersystem (1) nach einem der Ansprüche 1 bis 6, **dadurch gekennzeichnet, dass** das Rohr (120) bzw. die Rohre (120) des ersten Wärmetauschers (100) über eine Umlenkung (200) mit dem Rohr (120) bzw. den Rohren (120) des zweiten Wärmetauschers (300) derart verbunden sind, dass der heisse Abgasstrom um einen
Winkel zwischen 160° und 180° umgelenkt ist, wobei die Umlenkung (200) bevorzugt in einem vertikal unteren Bereich der ersten Wärmetauschereinheit (2) angeordnet ist.

8. Wärmetauschersystem (1) nach Anspruch 7, **dadurch gekennzeichnet, dass** die Umlenkung (200) eine verschliessbare Öffnung (210) und eine mit der Öffnung (210) kommunizierende Aufnahme für einen Behälter (220), insbesondere für die Aufnahme und zum Austragen von Asche und/oder Kondensaten umfasst.

9. Wärmetauschersystem (1) nach einem der Ansprüche 1 bis 8, **dadurch gekennzeichnet, dass** zwischen dem Rohr (120) bzw. den Rohren (120) des ersten Wärmetauschers (100) und dem Rohr (320) bzw. den Rohren (320) des zweiten Wärmetauschers (300) ein Winkel von weniger als 20°, insbesondere weniger als 10°, bevorzugt ungefähr 5° vorliegt.

10. Wärmetauschersystem (1) nach einem der Ansprüche 1 bis 9, **dadurch gekennzeichnet, dass** das Rohr (420) bzw. die Rohre (420) des Wärmetauschers (400) der zweiten Wärmetauschereinheit (3) zueinander parallel und in einer Reihe angeordnet sind, wobei der Wärmetauscher (400) der zweiten Wärmetauschereinheit (3) insbesondere ein im Wesentlichen vertikal angeordnetes Abgasrohr (410) mit einem in einem vertikal unteren Bereich verbundenen Umlenkblech (450) umfasst, und das Umlenkblech (450) zur Horizontalen um einen Winkel von weniger als 20°, insbesondere weniger als 10°, bevorzugt ungefähr um 3° so verschwenkt ist, dass sich das Umlenkblech (450) vom Abgasrohr (410) aus neigt.

11. Wärmetauschersystem (1) nach einem der Ansprüche 1 bis 10, **dadurch gekennzeichnet, dass** der Wärmetauscher (400) der zweiten Wärmetauschereinheit (3) ein Gehäuse (401) mit einem Gehäuseboden aufweist, welcher ausgehend vom Abgasrohr (410) aus in Richtung des Umlenkbleches (450) eine Neigung aufweist, welche in einen Kondensatablauf (432) mündet, wobei ein Winkel zwischen dem Gehäuseboden und einer horizontalen Ebene kleiner als 15°, bevorzugt kleiner als 8°, besonders bevorzugt ungefähr 3° ist, wobei mit Vorteil der Wärmetauscher (400) der zweiten Wärmetauschereinheit (3) ein Gebläse umfasst, welches insbesondere mit dem Abgasrohr (410) kommuniziert.

12. Wärmetauschersystem (1) nach einem der Ansprüche 1 bis 11, **dadurch gekennzeichnet, dass** das Rohr (120, 320, 420) bzw. die Rohre eines Wärmetauschers (100, 300, 400), insbesondere das Rohr (120, 320) bzw. die Rohre (120, 320) des ersten und/oder des zweiten Wärmetauschers (100, 300) der ersten Wärmetauschereinheit (2) Turbulatoren umfassen.

13. Heizkessel mit einem Wärmetauschersystem (1) nach einem der Ansprüche 1 - 12, umfassend
a) einen Brenner (500), insbesondere für Pellet und/oder Holzschnitzel;
b) einen Brennraum (520) mit einem Auslass für einen Abgasstrom, wobei
c) der Auslass mit einem Einlass der ersten Wärmetauschereinheit (2) kommuniziert; **dadurch gekennzeichnet, dass**
d) das erste Wärmeträgermedium im Heizkessel ausschliesslich durch die erste Wärmetauschereinhelt (2) des Wärmetauschersystems (1) geführt ist, sodass ein Wärmeaustausch mit dem Abgasstrom ausschliesslich in der ersten Wärmetauschereinheit (2) erfolgt.

14. Heizkessel nach Anspruch 13, **dadurch gekennzeichnet, dass** das zweite Wärmeträgermedium Luft, insbesondere atmosphärische Luft umfasst und insbesondere der Brenner (500) zur Versorgung mit einer Brennluft mit einem Wärmeträgerausgang des Wärmetauschers (400) der zweiten Wärmetauschereinheit (3) verbunden ist, wobei mit Vorzug der Brenner (500) ein Gebläse zur Förderung und Steuerung eines Volumenstromes der Brennluft umfasst.

15. Heizkessel nach einem der Ansprüche 13 bis 14, **dadurch gekennzeichnet, dass** der Brenner (500) und der erste Wärmetauscher (100), die erste Wärmetauschereinheit (2) und/oder das Wärmetauschersystem (1) mittels einer gedachten Ebene durch einen Verbindungsbereich zwischen dem Brennraum (520) und dem ersten Wärmetauscher (100) trennbar sind.

## Claims

1. Heat exchanger system (1), in particular for a pellet and/or woodchip furnace, for connection to a heating system, comprising
a) a first heat exchanger unit (2) for exchanging thermal energy between a hot exhaust gas stream and a first heat transfer medium,
b) a second heat exchanger unit (3) for exchanging thermal energy between the hot exhaust gas stream and a second heat transfer medium, wherein
c) the first heat exchanger unit (2) comprises a first and a second heat exchanger (100, 300), through which the hot exhaust gas stream is made to pass in series after entering the first heat exchanger unit (2), and
d) the second heat exchanger unit (3) comprises a heat exchanger (400), through which the hot exhaust gas stream is made to pass after entering the second heat exchanger unit (3);
e) the second heat exchanger unit (3) is connected downstream of the first heat exchanger unit (2) in the direction of flow of the hot exhaust gas stream; and wherein
f) the heat exchangers (100, 300, 400) of the first and second heat exchanger units (2, 3) respectively comprise at least one pipe (120, 320, 420) for the passing through of the hot exhaust gas stream and a flow chamber for the respective heat transfer medium, wherein the at least one pipe (120, 320, 420) is respectively arranged in the flow chamber and is preferably aligned substantially vertically;
**characterized in that**
g) the first and second heat exchangers (100, 300) of the first heat exchanger unit (2) are arranged in a V-shaped manner in relation to one another.

2. Heat exchanger system (1) according to Claim 1, **characterized in that** the first heat exchanger unit (2) respectively has a connection for a flow (110) and a return (310) of a heating system that is operated with the first heat transfer medium, wherein, between the flow (110) and the return (310), the first heat transfer medium is made to pass exclusively through the first heat exchanger unit (2).

3. Heat exchanger system (1) according to Claim 1 or 2, **characterized in that** the first heat transfer medium substantially comprises water, in particular heating water for a heater, and the second heat transfer medium substantially comprises air, in particular combustion air for a burner (500).

4. Heat exchanger system (1) according to one of Claims 1 to 3, **characterized in that** at least one heat exchanger of the first heat exchanger unit (2) and/or of the second heat exchanger unit (3) is formed as a counterflow heat exchanger.

5. Heat exchanger system (1) according to one of Claims 1 to 4, **characterized in that** the heat exchangers (100, 300) of the first heat exchanger unit respectively have a housing (101, 301), which is formed substantially as a circular cylinder and in which the pipe (120, 320) is arranged longitudinally parallel.

6. Heat exchanger system (1) according to one of Claims 1 to 5, **characterized in that** the heat exchangers (100, 300, 400) of the first and/or the second heat exchanger unit (2, 3) respectively comprise a plurality of pipes (120, 320, 420) for the passing through of the hot exhaust gas stream, wherein the plurality of pipes (120, 320, 420) of one heat exchanger (100, 300, 400) are arranged parallel to one another and in particular without contact and are preferably of a circular-cylindrical form, and in particular the pipes (120, 320) of the heat exchangers (100, 300) of the first heat exchanger unit (2) are arranged in an array on the basis of a regular polygon.

7. Heat exchanger system (1) according to one of Claims 1 to 6, **characterized in that** the pipe (120) or the pipes (120) of the first heat exchanger (100) is/are connected by way of a deflector (200) to the pipe (120) or the pipes (120) of the second heat exchanger (300) in such a way that the hot exhaust gas stream is deflected by an angle of between 160° and 180°, wherein the deflector (200) is preferably arranged in a vertically lower region of the first heat exchanger unit (2).

8. Heat exchanger system (1) according to Claim 7, **characterized in that** the deflector (200) comprises a closable opening (210) and a receptacle, communicating with the opening (210), for a container (220), in particular for receiving and discharging ash and/or condensates.

9. Heat exchanger system (1) according to one of Claims 1 to 8, **characterized in that** between the pipe (120) or the pipes (120) of the first heat exchanger (100) and the pipe (320) or the pipes (320) of the second heat exchanger (300) there is an angle of less than 20°, in particular less than 10°, preferably approximately 5°.

10. Heat exchanger system (1) according to one of Claims 1 to 9, **characterized in that** the pipe (420) or the pipes (420) of the heat exchanger (400) of the second heat exchanger unit (3) are arranged parallel to one another and in a row, wherein the heat exchanger (400) of the second heat exchanger unit (3) comprises in particular a substantially vertically arranged exhaust gas pipe (410) with a deflector plate (450) connected in a vertically lower region, and the deflector plate (450) is pivoted in relation to the horizontal by an angle of less than 20°, in particular less than 10°, preferably approximately by 3°, such that the deflector plate (450) slopes from the exhaust gas pipe (410).

11. Heat exchanger system (1) according to one of Claims 1 to 10, **characterized in that** the heat exchanger (400) of the second heat exchanger unit (3) has a housing (401) with a housing base, which has, starting from the exhaust gas pipe (410) and proceeding in the direction of the deflector plate (450), a slope that extends into a condensate outflow (432), wherein an angle between the housing base and a horizontal plane is less than 15°, preferably less than 8°, particularly preferably approximately 3°, wherein the heat exchanger (400) of the second heat exchanger unit (3) advantageously comprises a blower, which in particular communicates with the exhaust gas pipe (410).

12. Heat exchanger system (1) according to one of Claims 1 to 11, **characterized in that** the pipe (120, 320, 420) or the pipes of one heat exchanger (100, 300, 400), in particular the pipe (120, 320) or the pipes (120, 320) of the first and/or the second heat exchanger (100, 300) of the first heat exchanger unit (2), comprise(s) turbulators.

13. Heating boiler with a heat exchanger system (1) according to one of Claims 1 - 12, comprising
a) a burner (500), in particular for pellets and/or woodchips;
b) a combustion chamber (520) with an outlet for an exhaust gas stream, wherein
c) the outlet communicates with an inlet of the
first heat exchanger unit (2);
**characterized in that**
d) in the heating boiler, the first heat transfer medium is made to pass exclusively through the first heat exchanger unit (2) of the heat exchanger system (1), so that a heat exchange with the exhaust gas stream takes place exclusively in the first heat exchanger unit (2).

14. Heating boiler according to Claim 13, **characterized in that** the second heat transfer medium comprises air, in particular atmospheric air, and, for supplying with combustion air, the burner (500) is connected in particular to a heat transfer output of the heat exchanger (400) of the second heat exchanger unit (3), wherein the burner (500) with preference comprises a blower for delivering and controlling a volumetric flow of the combustion air.

15. Heating boiler according to either of Claims 13 and 14, **characterized in that** the burner (500) and the first heat exchanger (100), the first heat exchanger unit (2) and/or the heat exchanger system (1) can be separated by means of an imaginary plane through a connecting region between the combustion chamber (520) and the first heat exchanger (100).

## Revendications

1. Système d'échangeur de chaleur (1), en particulier pour un four à pellets et/ou à copeaux de bois, devant être raccordé à un système de chauffage, comprenant :
a) une première unité d'échangeur de chaleur (2) pour l'échange d'énergie thermique entre un flux de gaz d'échappement chaud et un premier milieu caloporteur,
b) une deuxième unité d'échangeur de chaleur (3) pour l'échange d'énergie thermique entre le flux de gaz d'échappement chaud et un deuxième milieu caloporteur,
c) la première unité d'échangeur de chaleur (2) comprenant un premier et un deuxième échangeur de chaleur (100, 300), à travers lesquels le flux de gaz d'échappement chaud est guidé en série après son entrée dans la première unité d'échangeur de chaleur (2), et
d) la deuxième unité d'échangeur de chaleur (3) comprenant un échangeur de chaleur (400) à travers lequel le flux de gaz d'échappement chaud est guidé après son entrée dans la deuxième unité d'échangeur de chaleur (3) ;
e) la deuxième unité d'échangeur de chaleur (3) étant montée en aval de la première unité d'échangeur de chaleur (2) dans la direction d'écoulement du flux de gaz d'échappement chaud ; et
f) les échangeurs de chaleur (100, 300, 400) de la première et de la deuxième unité d'échangeur de chaleur (2, 3) comprenant à chaque fois au moins un tuyau (120, 320, 420) pour le passage du flux de gaz d'échappement chaud et un espace d'écoulement pour le milieu caloporteur respectif, l'au moins un tuyau (120, 320, 420) étant disposé à chaque fois dans l'espace d'écoulement et étant de préférence orienté essentiellement verticalement ;
**caractérisé en ce que**
g) le premier et le deuxième échangeur de chaleur (100, 300) de la première unité d'échangeur de chaleur (2) sont disposés en forme de V l'un par rapport à l'autre.

2. Système d'échangeur de chaleur (1) selon la revendication 1, **caractérisé en ce que** la première unité d'échangeur de chaleur (2) présente à chaque fois un raccordement pour une conduite aller (110) et une conduite retour (310) d'un système de chauffage, qui fonctionne avec le premier milieu caloporteur, le premier milieu caloporteur étant conduit entre la conduite aller (110) et la conduite retour (310) exclusivement à travers la première unité d'échangeur de chaleur (2).

3. Système d'échangeur de chaleur (1) selon la revendication 1 ou 2, **caractérisé en ce que** le premier milieu caloporteur comprend essentiellement de l'eau, en particulier de l'eau de chauffage pour un chauffage, et le deuxième milieu caloporteur comprend essentiellement de l'air, en particulier de l'air comburant pour un brûleur (500).

4. Système d'échangeur de chaleur (1) selon l'une quelconque des revendications 1 à 3, **caractérisé en ce qu'**au moins un échangeur de chaleur de la première unité d'échangeur de chaleur (2) et/ou de la deuxième unité d'échangeur de chaleur (3) est réalisé sous forme d'échangeur de chaleur à contre-courant.

5. système d'échangeur de chaleur (1) selon l'une quelconque des revendications 1 à 4, **caractérisé en ce que** les échangeurs de chaleur (100, 300) de la première unité d'échangeur de chaleur présentent à chaque fois un boîtier (101, 301), qui est réalisé essentiellement sous forme de cylindre circulaire, et dans lequel est disposé, de manière parallèlement longitudinale, le tuyau (120, 320).

6. Système d'échangeur de chaleur (1) selon l'une quelconque des revendications 1 à 5, **caractérisé en ce que** les échangeurs de chaleur (100, 300, 400) de la première et/ou de la deuxième unité d'échangeur de chaleur (2, 3) comprennent à chaque fois plusieurs tuyaux (120, 320, 420) pour le passage du flux de gaz d'échappement chaud, les plusieurs tuyaux (120, 320, 420) d'un échangeur de chaleur (100, 300, 400) étant disposés parallèlement les uns en dessous des autres et notamment sans contact, et étant de préférence réalisés sous forme cylindrique circulaire et en particulier les tuyaux (120, 320) des échangeurs de chaleur (100, 300) de la première unité d'échangeur de chaleur (2) étant disposés dans une trame suivant un polygone régulier.

7. Système d'échangeur de chaleur (1) selon l'une quelconque des revendications 1 à 6, **caractérisé en ce que** le tuyau (120) ou les tuyaux (120) du premier échangeur de chaleur (100) sont connectés par le biais d'un renvoi (200) au tuyau (120) ou aux tuyaux (120) du deuxième échangeur de chaleur (300) de telle sorte que le flux de gaz d'échappement chaud soit dévié d'un angle compris entre 160° et 180°, le renvoi (200) étant de préférence disposé dans une région inférieure verticale de la première unité d'échangeur de chaleur (2).

8. Système d'échangeur de chaleur (1) selon la revendication 7, **caractérisé en ce que** le renvoi (200) comprend une ouverture refermable (210) et un logement communiquant avec l'ouverture (210) pour un récipient (220), en particulier pour la réception et l'évacuation de cendres et/ou de condensats.

9. Système d'échangeur de chaleur (1) selon l'une quelconque des revendications 1 à 8, **caractérisé en ce qu'**entre le tuyau (120) ou les tuyaux (120) du premier échangeur de chaleur (100) et le tuyau (320) ou les tuyaux (320) du deuxième échangeur de chaleur (300) est réalisé un angle inférieur à 20°, en particulier inférieur à 10°, de préférence d'approximativement 5°.

10. Système d'échangeur de chaleur (1) selon l'une quelconque des revendications 1 à 9, **caractérisé en ce que** le tuyau (420) ou les tuyaux (420) de l'échangeur de chaleur (400) de la deuxième unité d'échangeur de chaleur (3) sont disposés parallèlement les uns aux autres et en rangée, l'échangeur de chaleur (400) de la deuxième unité d'échangeur de chaleur (3) comprenant notamment un tuyau d'échappement disposé essentiellement verticalement (410) avec une tôle de déflexion (450) connectée dans une région verticalement inférieure, et la tôle de déflexion (450) étant pivotée par rapport à l'horizontale d'un angle inférieur à 20°, en particulier inférieur à 10°, de préférence d'approximativement 3°, de telle sorte que la tôle de déflexion (450) soit inclinée à l'écart du tuyau d'échappement (410).

11. Système d'échangeur de chaleur (1) selon l'une quelconque des revendications 1 à 10, **caractérisé en ce que** l'échangeur de chaleur (400) de la deuxième unité d'échangeur de chaleur (3) présente un boîtier (401) avec un fond de boîtier, qui présente une inclinaison dans la direction de la tôle de déflexion (450) à partir du tuyau d'échappement (410), laquelle débouche dans une sortie de condensat (432), un angle entre le fond du boîtier et un plan horizontal étant inférieur à 15°, de préférence inférieur à 8°, particulièrement préférablement d'environ 3°, l'échangeur de chaleur (400) de la deuxième unité d'échangeur de chaleur (3) comprenant avantageusement une soufflante, qui communique notamment avec le tuyau d'échappement (410).

12. Système d'échangeur de chaleur (1) selon l'une quelconque des revendications 1 à 11, **caractérisé en ce que** le tuyau (120, 320, 420) ou les tuyaux d'un échangeur de chaleur (100, 300, 400), en particulier le tuyau (120, 320) ou les tuyaux (120, 320) du premier et/ou du deuxième échangeur de chaleur (100, 300) de la première unité d'échangeur de chaleur (2) comprennent des turbulateurs.

13. Chaudière comprenant un système d'échangeur de chaleur (1) selon l'une quelconque des revendications 1 à 12, comprenant :
a) un brûleur (500), en particulier pour pellets et/ou copeaux de bois,
b) une chambre de combustion (520) avec une sortie pour un flux de gaz d'échappement,
c) la sortie communiquant avec une entrée de la
première unité d'échangeur de chaleur (2), **caractérisée en ce que**
d) le premier milieu caloporteur dans la chaudière est guidé exclusivement à travers la première unité d'échangeur de chaleur (2) du système d'échangeur de chaleur (1), de telle sorte qu'un échange de chaleur ait lieu avec le flux de gaz d'échappement exclusivement dans la première unité d'échangeur de chaleur (2).

14. Chaudière selon la revendication 13, **caractérisée en ce que** le deuxième milieu caloporteur comprend de l'air, en particulier de l'air atmosphérique, et notamment le brûleur (500) pour l'alimentation en un air comburant est connecté à une sortie de fluide caloporteur de l'échangeur de chaleur (400) de la deuxième unité d'échangeur de chaleur (3), le brûleur (500) comprenant de préférence une soufflante pour refouler et commander un débit volumique de l'air comburant.

15. Chaudière selon l'une quelconque des revendications 13 à 14, **caractérisée en ce que** le brûleur (500) et le premier échangeur de chaleur (100), la première unité d'échangeur de chaleur (2) et/ou le système d'échangeur de chaleur (1) peuvent être séparés au moyen d'un plan imaginaire par une région de connexion entre la chambre de combustion (520) et le premier échangeur de chaleur (100).
